# EUROPEAN PATENT APPLICATION

(11) **EP 3 731 111 A1**
(43) Date of publication of application: **28.10.2020**
(21) Application number: 18891856.9
(22) Date of filing: 05.10.2018
(51) Int. Cl.: G06F 16/9035

(54) **INFORMATION PROCESSING DEVICE, INFORMATION PROCESSING SYSTEM, INFORMATION PROCESSING METHOD, AND PROGRAM**

(30) Priority: 21.12.2017 JP 2017244707
(71) Applicant: Sony Corporation, 108-0075 Tokyo (JP)
(72) Inventor: MAEDA, Yoshinori, Tokyo 108-0075 (JP)
(74) Representative: MFG Patentanwälte Meyer-Wildhagen Meggle-Freund Gerhard PartG mbB
(86) International application number: PCT/JP2018/037348
(87) International publication number: WO 2019/123776

(57) **Abstract**

A configuration is achieved that can perform processing of selecting and presenting content corresponding to preference of a plurality of users as recommended content. The configuration has a recommended content selection unit that acquires user-based persona management data from a persona management database and selects recommended content from the acquired data. The recommended content selection unit acquires a plurality of pieces of the persona management data corresponding to a plurality of users, respectively, from the database, and selects data common among the plurality of pieces of persona management data that has been, as recommended content. The persona management data is data in which publication permission information corresponding to a relationship level corresponding to a relationship level between users is registered, and the recommended content selection unit selects recommended content from a range of the publication permission information determined on the basis of the relationship level.

## Description

### TECHNICAL FIELD

The present disclosure relates to an information processing apparatus, an information processing system, an information processing method, and a program. More specifically, the present invention relates to an information processing apparatus, an information processing system, an information processing method, and a program that recommend optimal content common to a plurality of users.

### BACKGROUND ART

In recent years, various content distributions via networks such as the Internet have been performed. Specifically, for example, various pieces of information of images, music, news, merchandise, books, movies, travels, stores or the like are actively provided.

Note that, in the following, these pieces of information distributed via networks are collectively referred to as content.

There are a huge number of contents on the Internet, and a user selects and views desired content from the huge number of pieces of content.

Systems that analyze user preference information and provide selectable recommended content from a huge number of pieces of content on the Internet are widely used.

However, there are few disclosures of a configuration for acquiring recommended content information in a case where the user wants to know recommended content reflecting the preference of a third party other than the user, for example, the companion of the user.

For example, the patent documents below each disclose a configuration for acquiring recommended content information reflecting the preferences of a third party other than the user, for example, the companion of the user.

Patent Document 1 (Japanese Patent Application Laid-Open No. 2014-025873), Patent Document 2 (International Publication WO2013/121470), and Patent Document 3 (Japanese Patent Application Laid-Open No. 2008-033806).

These documents each disclose a configuration in which preference information of a third party other than the user is analyzed to determine recommended content for the third party.

However, the configurations disclosed in these prior arts are configurations in which recommended content is determined mainly by analyzing preference of one specific third party, that is, one person.

For example, the documents do not disclose a specific configuration of a configuration for selecting and presenting content having high preference of all of a plurality of companions including the user.

### CITATION LIST

### PATENT DOCUMENT

Patent Document 1: Japanese Patent Application Laid-Open No. 2014-025873
Patent Document 2: International Publication WO2013/121470
Patent Document 3: Japanese Patent Application Laid-Open No. 2008-033806

### SUMMARY OF THE INVENTION

### PROBLEMS TO BE SOLVED BY THE INVENTION

An object of the present disclosure is to provide, for example, an information processing apparatus, an information processing system, an information processing method, and a program capable of selecting and presenting optimal content according to a plurality of users' preferences.

### SOLUTIONS TO PROBLEMS

A first aspect of the present disclosure is an information processing apparatus including
a recommended content selection unit that acquires user-based persona management data from a persona management database storing the user-based persona management data, and selects recommended content from the persona management data that has been acquired,
in which the recommended content selection unit
acquires a plurality of pieces of the persona management data corresponding to a plurality of users from the persona management database and selects data common among the plurality of pieces of persona management data that has been acquired, as recommended content.

Moreover, a second aspect of the present disclosure is an information processing system including
a user terminal and a data processing server,
in which the user terminal
transmits external information acquired by an external information acquisition unit to the data processing server, and
the data processing server
receives the external information from the user terminal and
acquires a plurality of pieces of user-based persona management data corresponding to a plurality of users specified on the basis of the external information from a persona management database, selects data common among the plurality of pieces of persona management data that has been acquired, as recommended content, and transmits the recommended content to the user terminal.

Moreover, a third aspect of the present disclosure is an information processing method performed in an information processing apparatus,
in which a recommended content selection unit of the information processing apparatus
performs recommended content selection processing of acquiring user-based persona management data from a persona management database storing the user-based persona management data, and selecting recommended content from the persona management data that has been acquired, and
the recommended content selection unit, in the recommended content selection processing,
acquires a plurality of pieces of the persona management data corresponding to a plurality of users from the persona management database and selects data common among the plurality of pieces of persona management data that has been acquired, as recommended content.

Moreover, a fourth aspect of the present disclosure is an information processing method performed in a data processing server that performs communication with a user terminal, the information processing method including
receiving external information acquired by the user terminal, and
acquiring a plurality of pieces of user-based persona management data corresponding to a plurality of users specified on the basis of the external information from a persona management database, selecting data common among the plurality of pieces of persona management data that has been acquired, as recommended content, and transmitting the recommended content to the user terminal.

Moreover, a fifth aspect of the present disclosure is a program causing information processing to be performed in an information processing apparatus,
the program causing a recommended content selection unit of the information processing apparatus to
perform recommended content selection processing of acquiring user-based persona management data from a persona management database storing the user-based persona management data, and selecting recommended content from the persona management data that has been acquired, and,
in the recommended content selection processing,
perform processing of acquiring a plurality of pieces of the persona management data corresponding to a plurality of users, respectively, from the persona management database and selecting data common among the plurality of pieces of persona management data that has been acquired, as recommended content.

Moreover, a sixth aspect of the present disclosure is a program that causes information processing to be performed in a data processing server that performs communication with a user terminal,
the program causing execution of
reception processing of external information acquired by the user terminal,
processing of acquiring a plurality of pieces of user-based persona management data corresponding to a plurality of users specified on the basis of the external information from a persona management database, and
processing of selecting data common among the plurality of pieces of persona management data that has been acquired, as recommended content, and transmitting the recommended content to the user terminal.

Note that the program of the present disclosure is a program that can be provided by, for example, a storage medium or a communication medium provided in a computer-readable format to an information processing apparatus or a computer system that can execute various program codes. By providing such a program in a computer-readable format, processing corresponding to the program is achieved on the information processing apparatus or the computer system.

Still other objects, features, and advantages of the present disclosure will become apparent from a detailed description based on embodiments of the present disclosure described later and accompanying drawings. Note that, in this specification, a system is a logical set configuration of a plurality of devices, and is not limited to one in which the devices of each configuration are in the same housing.

### EFFECTS OF THE INVENTION

According to a configuration of an embodiment of the present disclosure, a configuration is achieved that enables processing of selecting and presenting content corresponding to preference of a plurality of users as recommended content.

Specifically, for example, the configuration has a recommended content selection unit that acquires user-based persona management data from a persona management database and selects recommended content from the acquired data. The recommended content selection unit acquires a plurality of pieces of the persona management data corresponding to a plurality of users, respectively, from the database, and selects data common among the plurality of pieces of persona management data that has been, as recommended content. The persona management data is data in which publication permission information corresponding to a relationship level corresponding to a relationship level between users is registered, and the recommended content selection unit selects recommended content from a range of the publication permission information determined on the basis of the relationship level.

According to this configuration, a configuration is achieved that enables processing of selecting and presenting content corresponding to preference of a plurality of users as recommended content.

Note that the effects described in this specification are merely examples, and the present invention is not limited thereto, and may have additional effects.

### BRIEF DESCRIPTION OF DRAWINGS

Fig. 1 is a diagram illustrating a configuration example of an information processing apparatus.
Fig. 2 is a diagram illustrating an example of external information acquired by an external information acquisition unit.
Fig. 3 is a diagram for explaining a setting example of relationship level information indicating an intimacy degree between users.
Fig. 4 is a diagram illustrating an example of correspondence relationship data between attribute information (shareability information) set in each piece of external information and a relationship level between users.
Fig. 5 is a diagram illustrating an example of a table in which an information genre is associated with specific content (information in genre).
Fig. 6 is a diagram illustrating an example of user's persona management data stored in a persona management database.
Fig. 7 is a diagram illustrating an example of persona management data.
Fig. 8 is a diagram illustrating an example of persona management data.
Fig. 9 is a diagram illustrating an example of persona management data.
Fig. 10 is a diagram for explaining a processing example for selecting a recommended item from persona management data.
Fig. 11 is a diagram for explaining search processing based on a keyword acquired from persona management data.
Fig. 12 is an example of persona management data before update of a user A stored in a persona management database.
Fig. 13 is an example of persona management data after update of the user A stored in the persona management database.
Fig. 14 is a diagram for explaining a configuration example of the information processing apparatus.
Fig. 15 is a diagram illustrating a flowchart for explaining a sequence of processing performed by the information processing apparatus.
Fig. 16 is a diagram for explaining a configuration example of the information processing apparatus.
Fig. 17 is a diagram illustrating a flowchart for explaining a sequence of processing performed by the information processing apparatus.
Fig. 18 is a diagram for explaining an example of acquisition processing of the persona management data from the persona management database according to a user change.
Fig. 19 is a diagram for explaining an example of acquisition processing of the persona management data from the persona management database according to a user change.
Fig. 20 is a diagram illustrating a flowchart for explaining a sequence of processing performed by the information processing apparatus.
Fig. 21 is a diagram for explaining a configuration example of an information processing system.
Fig. 22 is a diagram for explaining a hardware configuration example of the information processing apparatus.

### MODE FOR CARRYING OUT THE INVENTION

Hereinafter, details of an information processing apparatus, an information processing system, an information processing method, and a program of the present disclosure will be described with reference to the drawings. Note that the description will be made according to the following items.
1. Configuration example of information processing apparatus
2. Specific examples of processing performed by information processing apparatus
3. Configuration example and processing sequence of information processing apparatus
4. Configuration example and processing sequence of information processing apparatus that outputs advertisement
5. Example of change processing of persona management data acquisition processing according to user change
6. Configuration example of information processing apparatus and information processing system
7. Hardware configuration example of information processing apparatus
8. Summary of configuration of present disclosure

### [1. Configuration example of information processing apparatus]

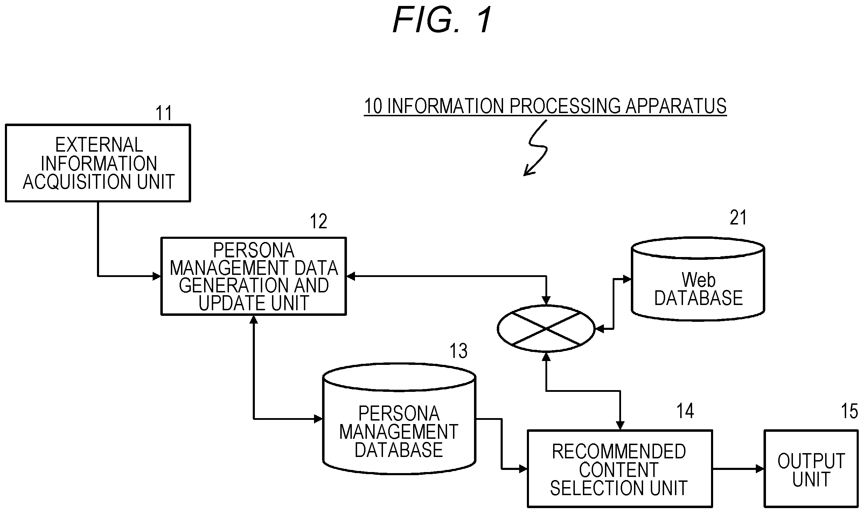

Fig. 1 is a diagram illustrating a configuration example of an information processing apparatus 10 of the present disclosure.

As illustrated in Fig. 1, the information processing apparatus 10 of the present disclosure includes an external information acquisition unit 11, a persona management data generation and update unit 12, a persona management database 13, a recommended content selection unit 14, and an output unit 15.

The external information acquisition unit 11 acquires, for example, information recorded in a camera, a microphone, another sensor, or an external database, and the like.

The persona management data generation and update unit 12 uses acquired information of the external information acquisition unit 11 to estimate a relationship between users, and performs processing of generating and updating a persona of each user.

The persona management database 13 is a database that stores the persona generated and updated by the persona management data generation and update unit 12.

The recommended content selection unit 14 selects content to be recommended using the persona information stored in the persona management database 13.

Various Web information stored in a Web database 21 is used for the selection processing of the recommended content.

The output unit 15 is an output unit that includes a display unit, a speaker, or the like that outputs the recommended content selected by the recommended content selection unit 14.

Note that persona or persona information is information indicating hobby and preference information of each user, and further is information indicating personal characteristics such as occupation, age, gender, personality, or behavioral habits of each user.

Specifically, for example, it is information on favorite foods, sports, artists, songs, and the like.

The persona management data generation and update unit 12 of the information processing apparatus 10 illustrated in Fig. 1 uses the acquired information of the external information acquisition unit 11 to estimate the relationship between the users, specifically, the relationship level information indicating the intimacy degree, and then, generate persona management data associated with the relationship level information indicating the intimacy degree to store the persona management data in the persona management database 13.

The recommended content selection unit 14 refers to the persona management data corresponding to each user stored in the persona management database 13, that is, publication permission persona information corresponding to the relationship level information indicating the intimacy degree between users, and performs processing of selecting and presenting items and content corresponding to persona that a plurality of users are interested in commonly, as recommended items or recommended content.

Hereinafter, a specific processing example will be described.

First, processing of the external information acquisition unit 11 of the information processing apparatus 10 illustrated in Fig. 1 will be described.

The external information acquisition unit 11 acquires, for example, information recorded in a camera, a microphone, another sensor, or an external database, and the like.

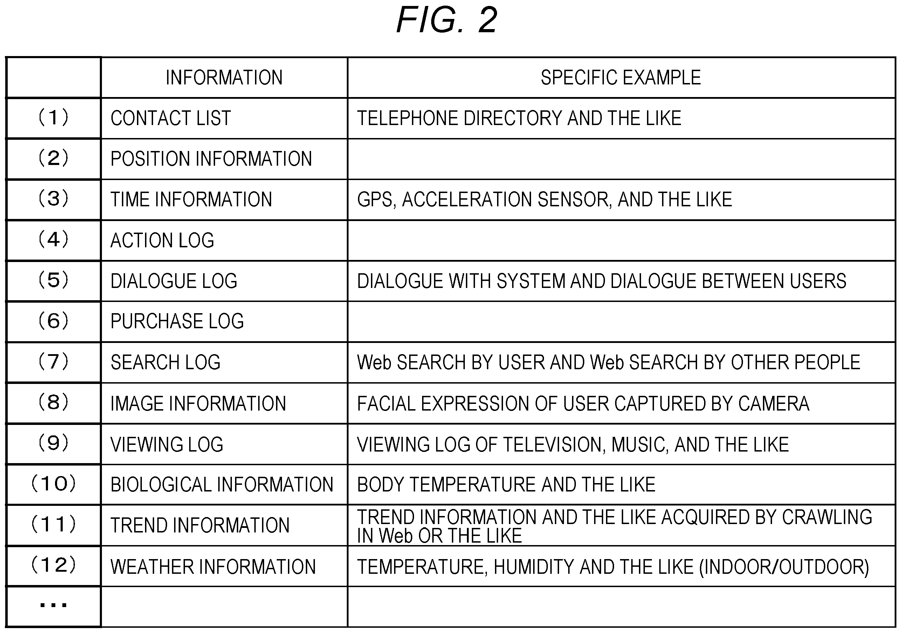

Fig. 2 illustrates an example of external information acquired by the external information acquisition unit 11.

As illustrated in Fig. 2, the external information acquired by the external information acquisition unit 11 is, for example, the following information.
(1) Contact list (telephone directory and the like)
(2) Position information
(3) Time information
(4) Action log (GPS, acceleration sensor, and the like)
(5) Dialogue log (dialogue with system, dialogue between users)
(6) Purchase log
(7) Search log (log of Web search by user and Web search by other people)
(8) Image information (facial expression of user acquired by camera device, and the like)
(9) Viewing log (television, music, and the like)
(10) Biological information (body temperature and the like)
(11) Trend information (trend information acquired by crawling from Web and the like)
(12) Weather information (also including indoors such as temperature and humidity)

For example, such information is acquired from outside. Specifically, such information is acquired from acquired information of a camera, a microphone, another sensor, or information recorded in an external database.

In each piece of information acquired by the external information acquisition unit 11, attribute information (shareability information) indicating whether the information can be shared with other users or not can be set.

Furthermore, the attribute information (shareability information) indicating whether sharing with other users is possible or not can be determined according to the relationship level information between users, that is, an intimacy degree.

As the attribute information (shareability information) indicating whether sharing with other users is possible or not, attribute information recorded in advance in the external information acquired by the external information acquisition unit 11 can be used for example, and the attribute information can be set by user input to the persona management data generation and update unit 12 of the information processing apparatus 10 illustrated in Fig. 1.

The user can register and change this attribute information (shareability information) at any time.

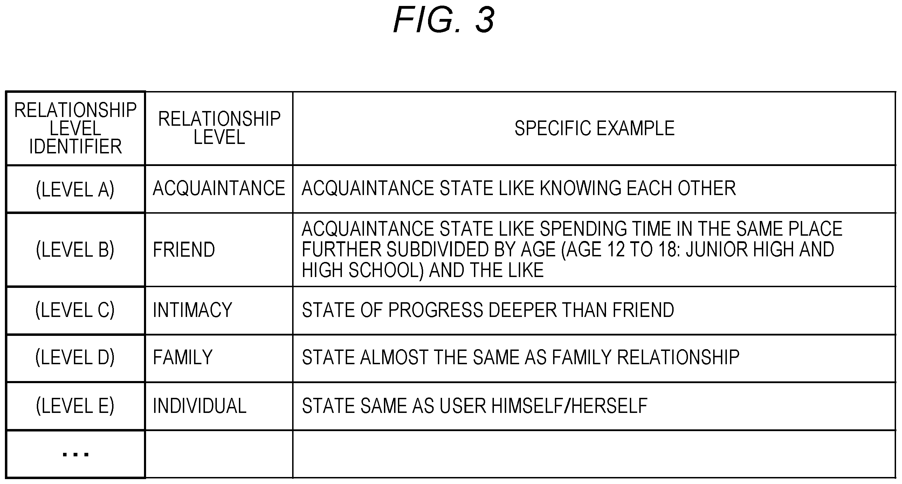

A setting example of relationship level information indicating an intimacy degree between users will be described with reference to Fig. 3.

In the example illustrated in Fig. 3, five levels A to E are set as the relationship levels. The relationship levels A to E correspond to the following relationships.

User relationship level A = acquaintance = acquaintance state like knowing each other

User relationship level B = friend = acquaintance state like spending time in the same place,

This level B (friend) can be set by further subdividing by age (age 12 to 18: junior high and high school).

User relationship level C = intimacy = state of friendship deeper than friend

User relationship level D = family = state almost the same as family relationship

User relationship level E = individual = state the same as user himself/herself

The relationship level information indicating the intimacy degree between users is set to a plurality of levels, for example, as described above.

The relationship level information indicating the intimacy degree between users is stored in the persona management database 13 as a table.

This table is generated and updated by the persona management data generation and update unit 12 using the acquired information of the external information acquisition unit 11 or user input information.

For example, the persona management data generation and update unit 12 estimates the relationship between the users, specifically, the relationship level indicating the intimacy degree by using the acquired information of the external information acquisition unit 11 or the user input information, determines which of the levels A to E illustrated in Fig. 3 the relationship level between the users is on the basis of the estimation result, and registers the result in a database.

Note that the number of levels (the number of layers), type, state, and the like of the relationship level can be edited by the user.

For example, the persona management data generation and update unit 12 can estimate the relationship level between users on the basis of the information acquired by the external information acquisition unit 11.

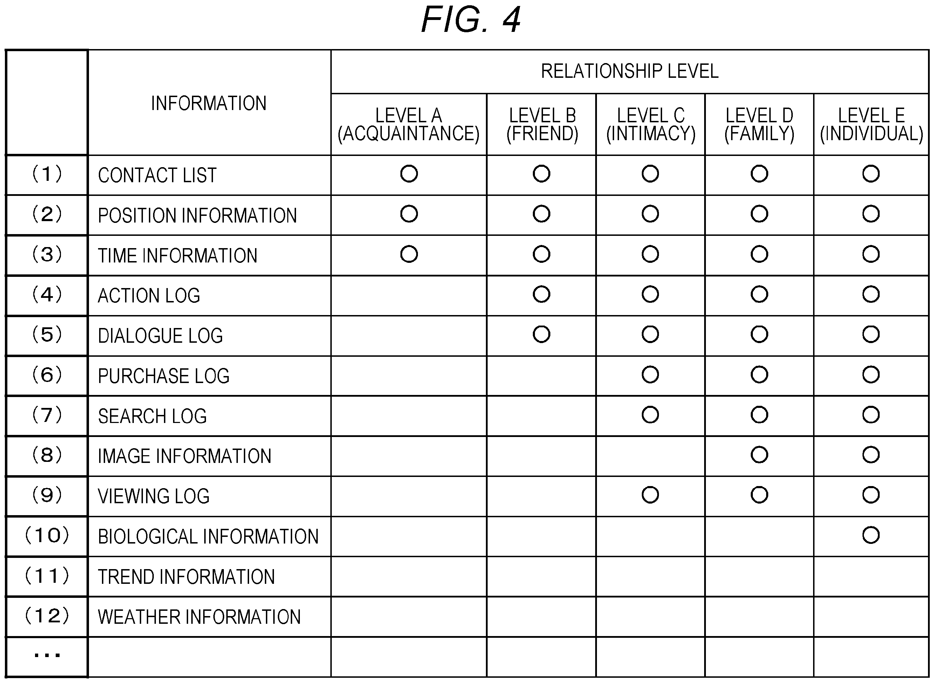

Fig. 4 is a diagram illustrating an example of correspondence relationship data between external information acquired by the external information acquisition unit 11 and a relationship level between users.

Fig. 4 illustrates the external information acquired by the external information acquisition unit 11 described above with reference to Fig. 2. The information is as follows.
(1) Contact list (telephone directory and the like)
(2) Position information
(3) Time information
(4) Action log (GPS, acceleration sensor, and the like)
(5) Dialogue log (dialogue with system, dialogue between users)
(6) Purchase log
(7) Search log (log of Web search by user and Web search by other people)
(8) Image information (facial expression of user acquired by camera device, and the like)
(9) Viewing log (television, music, and the like)
(10) Biological information (body temperature and the like)
(11) Trend information (trend information acquired by crawling from Web and the like)
(12) Weather information (also including indoors such as temperature and humidity)

Fig. 4 illustrates the relationship level between users estimated according to the setting mode of whether each of these pieces of information (1) to (12) is shared (o) or not (-).

For example,
(1) contact list,
(2) position information,
(3) time information

The relationship level between users sharing only these pieces of information is estimated as the relationship level A = "acquaintance" level at the maximum.

For example,
(1) contact list,
(2) position information,
(3) time information
(4) action log
(5) dialogue log

The relationship level between the users sharing these pieces of information is estimated as the relationship level B = "friend" level.

That is, in a case where it is determined from the information of the user A and the user B acquired by the external information acquisition unit 11 that these two users are acting together and interacting with each other, the relationship level of the user A and the user B is estimated as the level B (friend).

As described above, the persona management data generation and update unit 12 analyzes the content from the external information acquired from the external information acquisition unit 11, and automatically estimates the relationship with another person.

However, for example, in a case where although a large amount of information is shared, the number of contacts is small in the information of a contact list or the like, processing of not estimating the relationship level as "friend" level but as "acquaintance", and the like are performed.

Note that the setting of the correspondence relationship between the sharing state of each piece of information illustrated in Fig. 4 and the relationship level can also be edited by the user himself/herself.

The recommended content selection unit 14 performs processing of referring to the persona information of each user stored in the persona management database 13, further, relationship level information indicating the intimacy degree between users, and further, the publication permission information of each user, and the like, and selecting and presenting content that a plurality of users is interested in commonly, as recommended content.

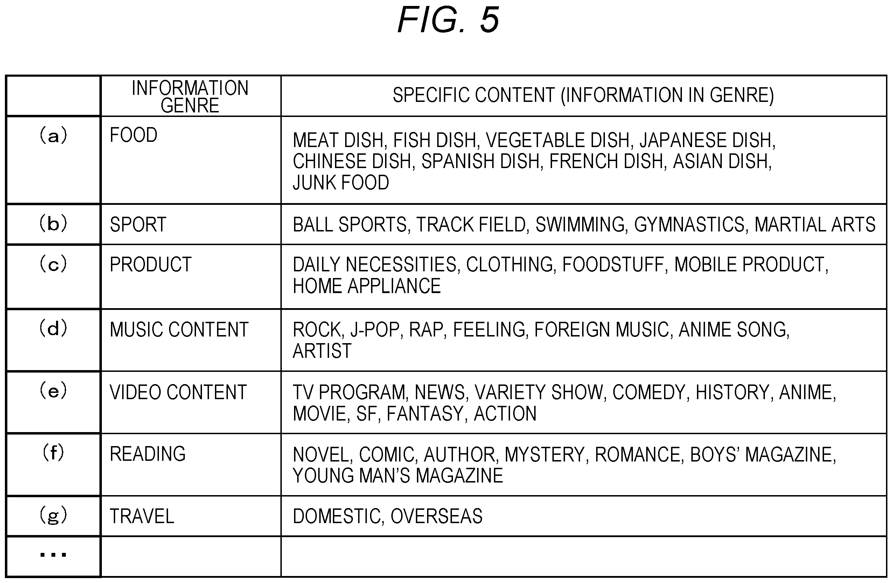

The recommended content selection unit 14 selects recommended content on the basis of the data stored in the persona management database 13. The persona management database 13 stores therein a table in which the information genres as illustrated in Fig. 5 and specific content (information in genre) are associated with each other, as data for classification into genres of specific recommended content, as reference information for application to content recommendation by the recommended content selection unit 14.

That is, it is a table including the following correspondence data.

### (a) Information genre = food

Detailed information in genre = meat dish, fish dish, vegetable dish, Japanese dish, Chinese dish, Spanish dish, French dish, Asian dish, junk food,

### (b) Information genre = sports

Detailed information in genre = ball sports, track and field, swimming, gymnastics, martial arts,

### (c) Information genre = goods

Detailed information in genre = daily necessities, clothing, foodstuff, mobile product, home appliance,

### (d) Information genre = music content

Detailed information in genre = rock, J-POP, rap, feeling, foreign music, anime song, artist

### (e) Information genre = video content

Detailed information in genre = TV program, news, variety show, comedy, history, anime, movie, SF, fantasy, action,

### (f) Information genre = reading

Detailed information in genre = novel, comic, author, mystery, romance, boys' magazine, young man's magazine,

### (g) Information genre = Travel

Detailed information in genre = domestic, overseas,

A table in which the information genre illustrated in Fig. 5 is associated with the specific content (information in genre) is stored in the persona management database 13 as default data in advance.

Note that the user can edit the genre and addition and deletion of specific content. In a case where a genre is added, the persona management data generation and update unit 12 automatically collects specific content that matches the genre from the Web database 21.

The persona management data generation and update unit 12 sets, for each user, a user-specific persona management table in which the content of the tables described above are associated with each other for the purpose of determining persona indicating a user characteristic of each user and a recommended shared item, and stores the persona management table in the persona management database 13.

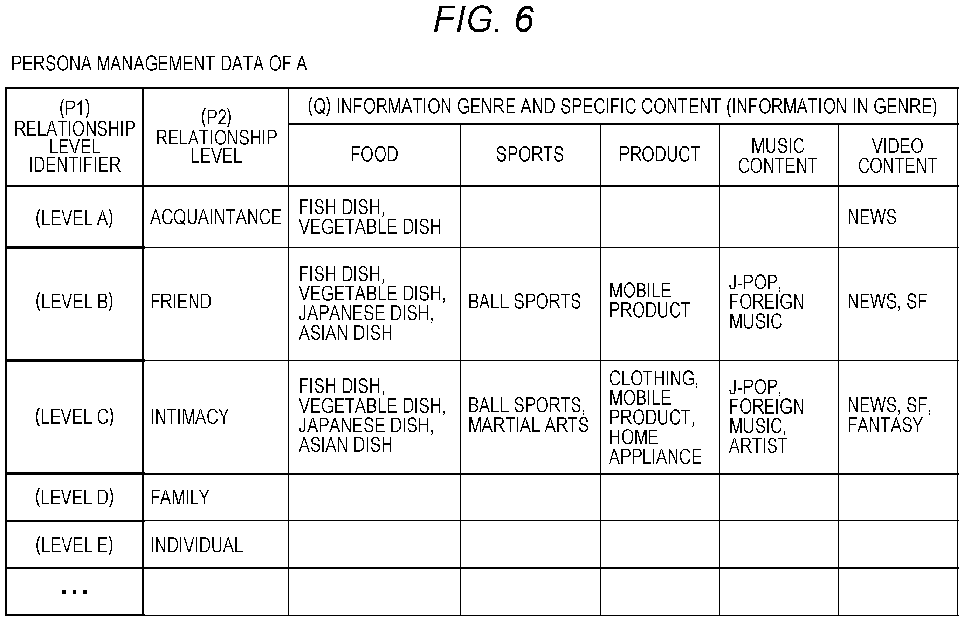

Fig. 6 illustrates an example of persona management data of one user (user A) stored in the persona management database 13.

The persona management data is set as correspondence data of the following data.

(Data P) Relationship level ((A) acquaintance to (E) individual)
(Data Q) Shareable information [genre (specific content)]

The persona management data of the user A illustrated in Fig. 6 has the following settings.

(P) Relationship level = (A) acquaintance
(Q) Shareable [genre (specific content)] = [Food (fish dish, vegetables dish)], [Video content (news)]

(P) Relationship level = (B) friend
(Q) Shareable [genre (specific content)] = [Food (fish dish, vegetable dish, Japanese dish, Asian dish)], [Sports (ball sports)],
[Product (mobile product)],
[Music content (J-POP, foreign music)],
[Video content (news, SF)],

(P) Relationship level = (C) Intimacy
(Q) Shareable [genre (specific content)]
[Food (fish dish, vegetable dish, Japanese dish, Asian dish)], [Sports (ball sports, martial arts)],
[Product (clothing, mobile product, home appliance)],
[Music content (J-POP, foreign music, artist)],
[Video content (news, SF, fantasy)],

As described above, there are a plurality of different levels of relationship depending on the intimacy degree. As can be understood from the persona management data illustrated in Fig. 6, the persona management data has a setting in which, as the relationship level has a higher intimacy degree, the publication permission information increases.

The persona management data illustrated in Fig. 6 is automatically updated and corrected by the persona management data generation and update unit 12 using the external information acquired from the external information acquisition unit 11.

For example, the increase and decrease of recommended items are controlled by analyzing a change in preference and a recommended genre by a user's action history and environment information. This editing can be performed by the user himself/herself.

The recommended content selection unit 14 of the information processing apparatus 10 selects recommended content on the basis of the data stored in the persona management database 13.

For example, the recommended content selection unit 14 acquires the persona management data of the user using the information processing apparatus 10 and the persona management data of each counterpart user (one or more) that the user wants to know, selects sharable information genre or specific content registered in the plurality of pieces of persona management data, and presents the selected data, a search result based on the selected data, or the like with highlighting or in a list form.

Note that, in a case of performing processing for the persona management table of many users, shared items (information genre or specific content) of all users do not always match. In that case, items (information genre or specific content) shared by more users, that is, items with a high degree of matching, the search result based on the items, or the like is presented with highlighting or in a list form.

### [2. Specific examples of processing performed by information processing apparatus]

Next, a specific example of the content recommendation processing and the update processing of the persona management data performed by the information processing apparatus 10 will be described. The following examples will be sequentially described.
(Example 1) Content recommendation processing using user A's preference and action information and user B's persona management data
(Example 2) Content recommendation processing using persona management data of three or more users
(Example 3) Update processing of persona management data
(Example 1) Content recommendation processing using user A's preference and action information and user B's persona management data

First, as Example 1, an example of content recommendation processing using user A's preference and action information and user B's persona management data will be described.

Two users are user A and user B.

User A and user B have a little business conversation, and the relationship level is relationship level A (acquaintance).

The persona management database 13 stores persona management data of the user B.

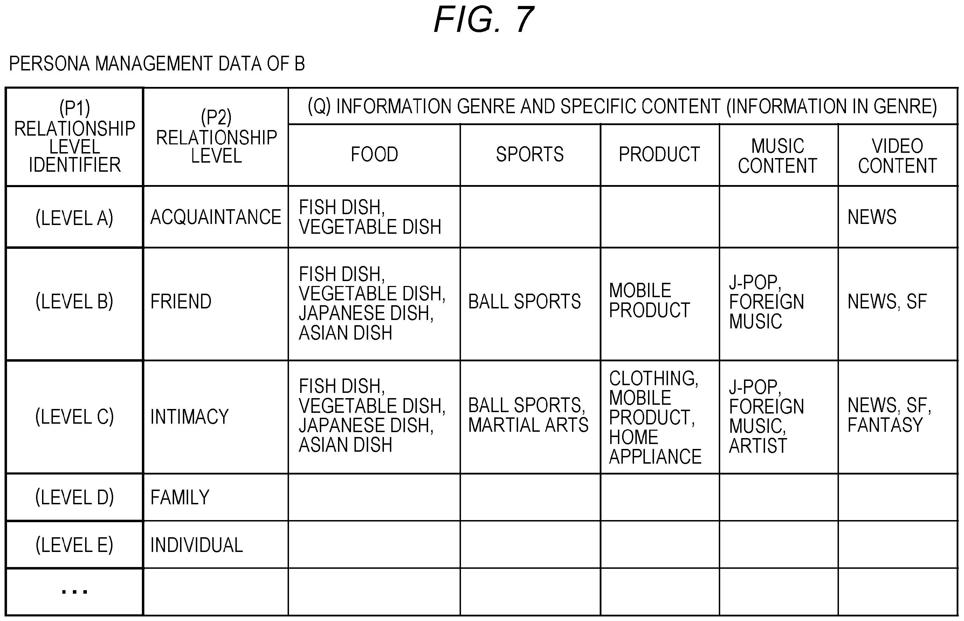

Fig. 7 illustrates a data configuration of the persona management data of the user B stored in the persona management database 13.

The persona management data of the user B illustrated in Fig. 7 is correspondence relation data of the following data.

(Data P) Relationship level ((A) acquaintance to (E) individual)
(Data Q) Shareable information [genre (specific content)]

The persona management data of the user B illustrated in Fig. 7 has the following settings.

(P) Relationship level = (A) acquaintance
(Q) Shareable [genre (specific content)] =
[Food (fish dish, vegetables dish)],
[Video content (news)]

(P) Relationship level = (B) friend
(Q) Shareable [genre (specific content)] =
[Food (fish dish, vegetable dish, Japanese dish, Asian dish)], [Sports (ball sports)],
[Product (mobile product)],
[Music content (J-POP, foreign music)],
[Video content (news, SF)],

(P) Relationship level = (C) Intimacy
(Q) Shareable [genre (specific content)]
[Food (fish dish, vegetable dish, Japanese dish, Asian dish)], [Sports (ball sports, martial arts)],
[Product (clothing, mobile product, home appliance)],
[Music content (J-POP, foreign music, artist)],
[Video content (news, SF, fantasy)],

The persona of the user B that the user A can acquire from the persona management database 13 is not all of the registered data of the persona management data of the user B, but data according to the relationship level between the user A and the user B.

The recommended content selection unit 14 of the information processing apparatus 10 selects and acquires only data corresponding to the relationship level between the user A and the user B from the persona management database 13 and outputs the data to the output unit 15.

The relationship level between the user A and the user B is the relationship level A (acquaintance).

Accordingly, the persona of the user B that the user A can acquire from the persona management database 13 is only data of (P) relationship level = (A) acquaintance illustrated in Fig. 7.

That is, the user A can acquire only the following data, which is (Q) shareable [genre (specific content)] recorded correspondingly to (P) relationship level = (A) acquaintance,
[Food (fish dish, vegetables dish)],
[Video content (news)].

The recommended content selection unit 14 of the information processing apparatus 10 selects and acquires only data corresponding to the relationship level between the user A and the user B from the persona management database 13, that is,
[Food (fish dish, vegetable dish)],
[Video content (news)]
described above and outputs only these pieces of data to the output unit 15.

On the basis of this information, the user A can find that information on B's favorite fish and vegetable dish and B likes news topics.

Moreover, it is assumed that the recommended content selection unit 14 of the information processing apparatus 10 acquires from the persona management data of the user A or the preference/action information acquired by the existing method that the user B often eats fish dishes.

In this case, the recommended content selection unit 14 of the information processing apparatus 10 performs display control of displaying with highlighting the item of "fish dish" among the following data
[Food (fish dish, vegetables dish)],
[Video content (news)]
that is output to the output unit 15.

Moreover, the recommended content selection unit 14 of the information processing apparatus 10 crawls (searches and saves) in the Web database 21 accessible via the network, and thereby, stocks the detailed information of the highlighted item in the persona management database 13.

By performing such processing, in a case where A eats with B, it is possible to smoothly search for a dish that matches preference of himself/herself and preference of the counterpart.

### (Example 2) Content recommendation processing using persona management data of three or more users

Next, as Example 2, an example of processing in a case of performing content recommendation processing using persona management data of three or more users will be described.

This example is a processing example in which the user A
acquires persona management data of three of B, C and D from the persona management database 13 and selects content that is estimated to be of common interest to users B, C, and D.

As a precondition, it is assumed that the relationship level between the user A and the users B, C, and D has the following settings.
User A and user B are at relationship level B (friend).
User A and user C are at relationship level A (acquaintance).
User A and user D are at relationship level A (acquaintance).

The persona management data of the user B is the data described with reference to Fig. 7 and has the following settings.
(P) Relationship level = (A) acquaintance
(Q) Shareable [genre (specific content)] =
[Food (fish dish, vegetables dish)],
[Video content (news)]

(P) Relationship level = (B) friend
(Q) Shareable [genre (specific content)] =
[Food (fish dish, vegetable dish, Japanese dish, Asian dish)], [Sports (ball sports)],
[Product (mobile product)],
[Music content (J-POP, foreign music)],
[Video content (news, SF)],

(P) Relationship level = (C) Intimacy
(Q) Shareable [genre (specific content)]
[Food (fish dish, vegetable dish, Japanese dish, Asian dish)], [Sports (ball sports, martial arts)],
[Product (clothing, mobile product, home appliance)],
[Music content (J-POP, foreign music, artist)],
[Video content (news, SF, fantasy)],

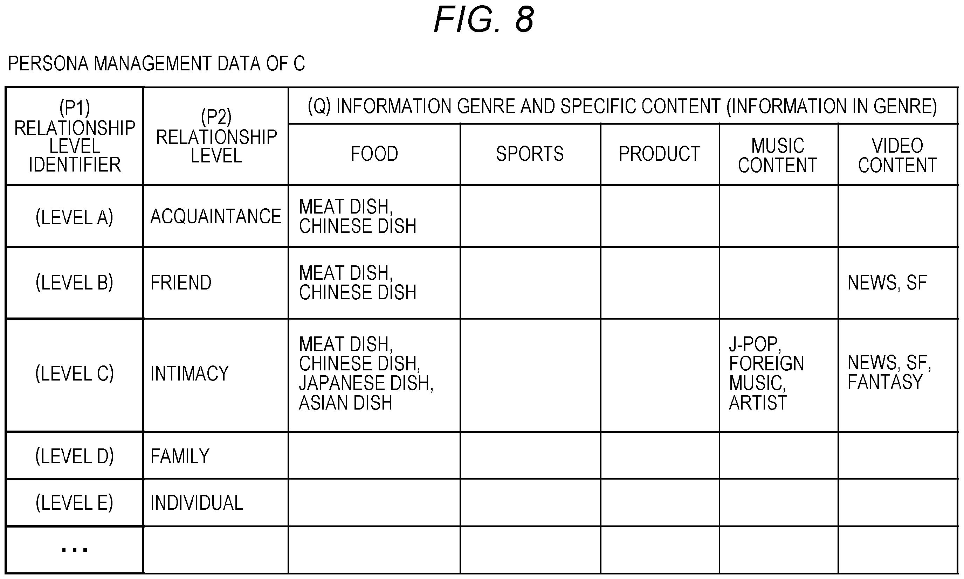

Furthermore, the persona management data of the user C is the data illustrated in Fig. 8 and has the following settings.
(P) Relationship level = (A) acquaintance
(Q) Shareable [genre (specific content)] =
[Food (meat dish, Chinese dish)],

(P) Relationship level = (B) friend
(Q) Shareable [genre (specific content)] =
[Food (meat dish, Chinese dish)],
[Video content (news, SF)],

(P) Relationship level = (C) Intimacy
(Q) Shareable [genre (specific content)]
[Food (meat dish, Chinese dish, Japanese dish, Asian dish)], [Sports (ball sports, martial arts)],
[Music content (J-POP, foreign music, artist)],
[Video content (news, SF, fantasy)],

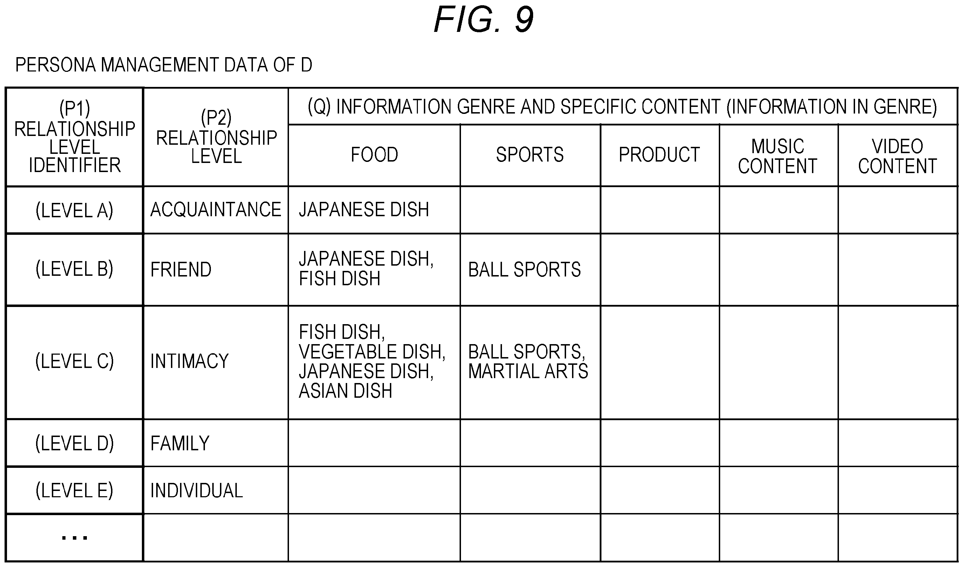

Moreover, the persona management data of the user D is the data illustrated in Fig. 9 and has the following settings.
(P) Relationship level = (A) acquaintance
(Q) Shareable [genre (specific content)] =
[Food (Japanese dish)],

(P) Relationship level = (B) friend
(Q) Shareable [genre (specific content)] =
[Food (Japanese dish, fish dish)],
[Sports (ball sports)],

(P) Relationship level = (C) Intimacy
(Q) Shareable [genre (specific content)]
[Food (Japanese dish, fish dish, Japanese dish, Asian dish)], [Sports (ball sports, martial arts)],

The persona of the users B, C, and D that the user A can acquire from the persona management database 13 is not all of the registered data of the persona management data of the users B, C, and D illustrated in Figs. 7 to 9, but data according to the relationship level between the user A and the users B to D.

The recommended content selection unit 14 of the information processing apparatus 10 selects and acquires only data corresponding to the relationship level between the user A and the users B to D from the persona management database 13 and outputs the data to the output unit 15.

The relationship level between the user A and the user B is the relationship level B (friend).

The relationship level between the user A and the user C is the relationship level A (acquaintance).

The relationship level between the user A and the user D is the relationship level A (acquaintance).

Accordingly, the persona of each of the users B, C, and D that the user A can acquire from the persona management database 13 is the following data.

The user A can acquire from the persona management data of the user B, only data of (P) relationship level = (B) friend illustrated in Fig. 7.

The user A can acquire from the persona management data of the user C, only data of (P) relationship level = (A) acquaintance illustrated in Fig. 8.

The user A can acquire from the persona management data of the user D, only data of (P) relationship level = (A) acquaintance illustrated in Fig. 9.

That is, the user A can acquire from the persona management data of the user B, the following data, which is (Q) sharable [genre (specific content)] recorded corresponding to (P) relational level = (B) friend.
(Q) Shareable [genre (specific content)] =
[Food (fish dish, vegetable dish, Japanese dish, Asian dish)], [Sports (ball sports)],
[Product (mobile product)],
[Music content (J-POP, foreign music)],
[Video content (news, SF)],

Furthermore, the user A can acquire from the persona management data of the user C, the following data, which is (Q) sharable [genre (specific content)] recorded corresponding to (P) relational level = (A) acquaintance.
(Q) Shareable [genre (specific content)] =
[Food (meat dish, Chinese dish)],

Furthermore, the user A can acquire from the persona management data of the user D, the following data, which is (Q) sharable [genre (specific content)] recorded corresponding to (P) relational level = (A) acquaintance.
(Q) Shareable [genre (specific content)] =
[Food (Japanese dish)],

As described above, the persona that the A can acquire is data that can be shared at the friend level of B and the acquaintance level of C and D.

For example, it is assumed that the user A selects a place where four users A to D eat together.

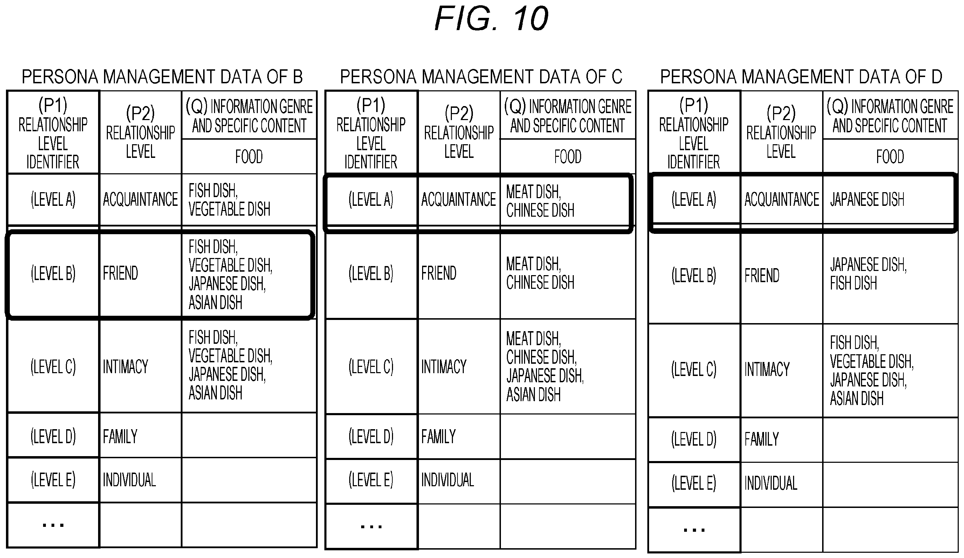

The recommended content selection unit 14 of the information processing apparatus 10 compares the specific content of the food genre of the users B, C, and D acquired by the user A. That is, the specific content is the following data illustrated in Fig. 10.

User B's friend level shared data [food (fish dish, vegetables dish, Japanese dish, Asian dish)],

User C's acquaintance level shared data [food (meat dish, Chinese dish)],
User D's acquaintance level shared data [food (Japanese dish)],

From the persona management data of the food genre of these three users, there is no matching data.

In this case, the recommended content selection unit 14 of the information processing apparatus 10 outputs data of users B, C, and D that can be recommendation candidates, that is,
User B's friend level sharable specific content data,
User C's acquaintance level sharable specific content data, and
User D's acquaintance level sharable specific content data,
to the output unit 15, and presents the output data to A without highlighting.

Moreover, the recommended content selection unit 14 of the information processing apparatus 10 performs crawling (searching and saving) in the Web database 21 using the candidate names shown in the specific content of each of the users B to D as keywords.

That is, the recommended content selection unit 14 performs crawling (searching and saving) in the Web database 21 using the following words as keywords,
(fish dish, vegetable dish, Japanese dish, Asian dish) acquired from the persona management data of the user B,
(meat dish, Chinese dish) acquired from the persona management data of the user C, and
(Japanese dish) acquired from the persona management data of the user D.

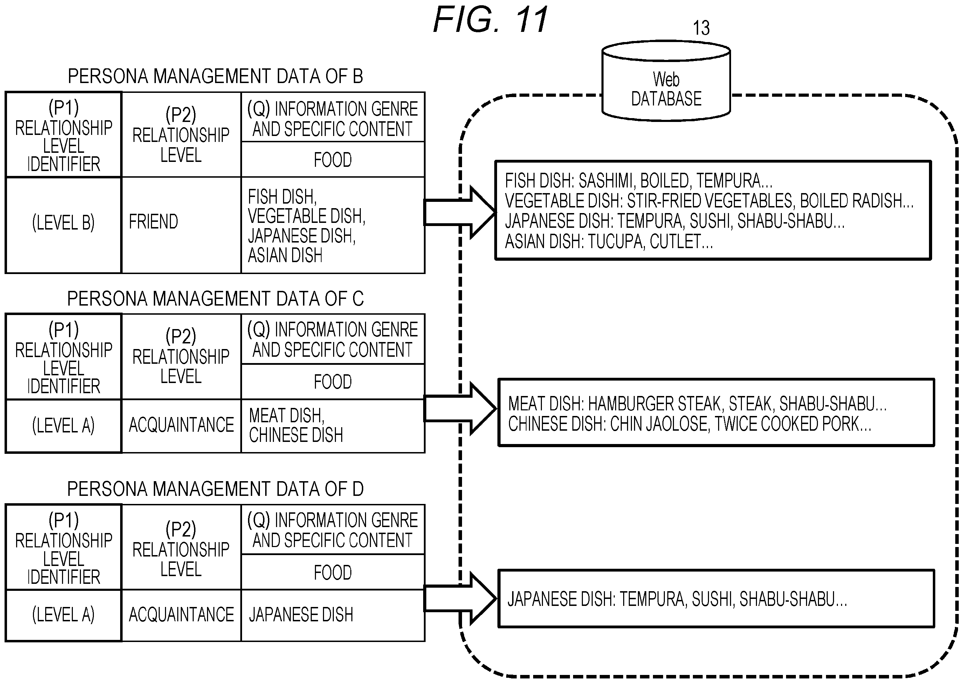

It is assumed that, as a result of the crawling (searching and saving), a specific dish as illustrated in Fig. 11, for example, has been searched.

Search results based on keywords (fish dish, vegetable dish, Japanese dish, Asian dish) acquired from the persona management data of the user B,
Fish dish: sashimi, boiled, tempura...
Vegetable dish: stir-fried vegetables, boiled radish... Japanese dish: tempura, sushi, shabu-shabu...
Asian dish: Tucupa, Cutlet...

Search results based on keywords (meat dish, Chinese dish) acquired from the persona management data of the user C,
Meat dish: hamburger, steak, shabu-shabu...
Chinese food: Chin jaolose, twice cooked pork...

Search results based on keywords (Japanese dish) acquired from the persona management data of the user D,
Japanese dish: tempura, sushi, shabu-shabu...

As described above, it is assumed that, as a result of crawling (searching and saving) in the Web database 21 using the candidate names shown in the specific content of the users B to D as keywords,
a specific dish as illustrated in Fig. 11 has been searched.

As degradation of the search, "shabu-shabu" is common dish name in the results of the users B, C, and D.

According to this result, the recommended content selection unit 14 of the information processing apparatus 10 outputs "shabu-shabu" as output information to the output unit 15.

Alternatively, the recommended content selection unit 14 outputs "Japanese dish" which is a genre to which "shabu-shabu" belongs.

Alternatively, the recommended content selection unit 14 outputs the genre names in the order of the genre to which the dish common to the three users B, C, and D belong, and the genre of the dish common to only two users in the search results of the users B, C, and D. For example, output is performed as
1, Japanese dish
2, meat dish
3, fish dish
· ·
· ·.

A can determine a place to eat smoothly from the presented results.

### (Example 3) Update processing of persona management data

Next, as Example 3, update processing of persona management data stored in the persona management database 13 will be described.

The persona management data generation and update unit 12 of the information processing apparatus 10 performs update processing of the persona management data stored in the persona management database 13.

For example, an example of update processing of the persona management data of the user A will be described.

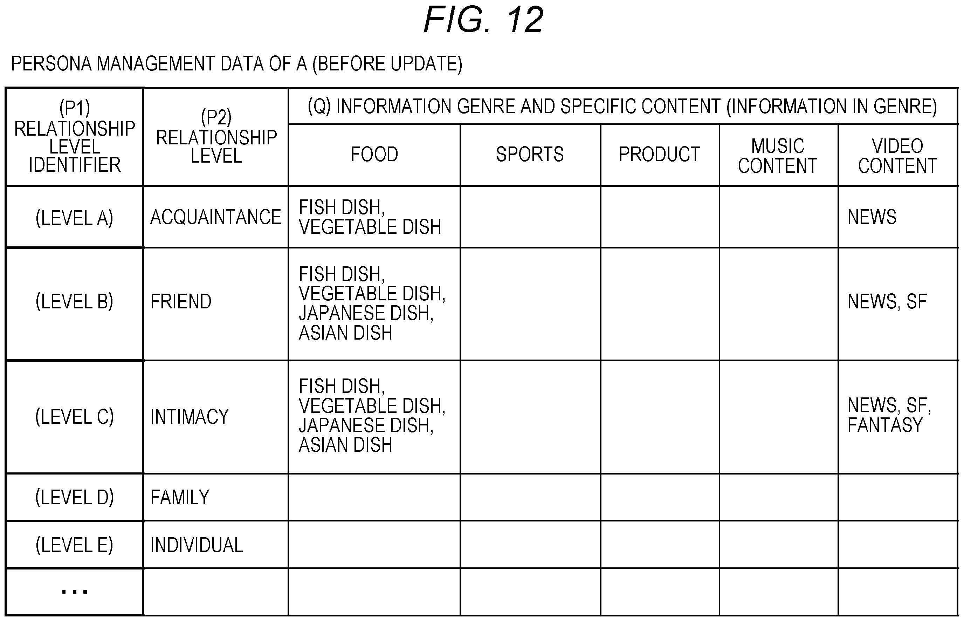

Fig. 12 is an example of persona management data before update of the user A stored in the persona management database 13.

The persona management data of the user A before the update illustrated in Fig. 12 has the following settings.
(P) Relationship level = (A) acquaintance
(Q) Shareable [genre (specific content)] = [Food (fish dish, vegetables dish)],
[Video content (news)]

(P) Relationship level = (B) friend
(Q) Shareable [genre (specific content)] = [Food (fish dish, vegetables dish, Japanese dish, Asian dish)], [Video content (news, SF)]

(P) Relationship level = (C) Intimacy
(Q) Shareable [genre (specific content)] = [Food (fish dish, vegetables dish, Japanese dish, Asian dish)],
[Video content (news, SF, fantasy)]

The persona management data generation and update unit 12 of the information processing apparatus 10 grasps through the external information acquisition unit 11 that A often watches sports in daily life, searches for or buys clothing, mobile product, home appliance, or the like on the Internet, and listens to music content.

In this case, the persona management data generation and update unit 12 updates the persona management data on the basis of the search information, the action information, and the like of the user A.

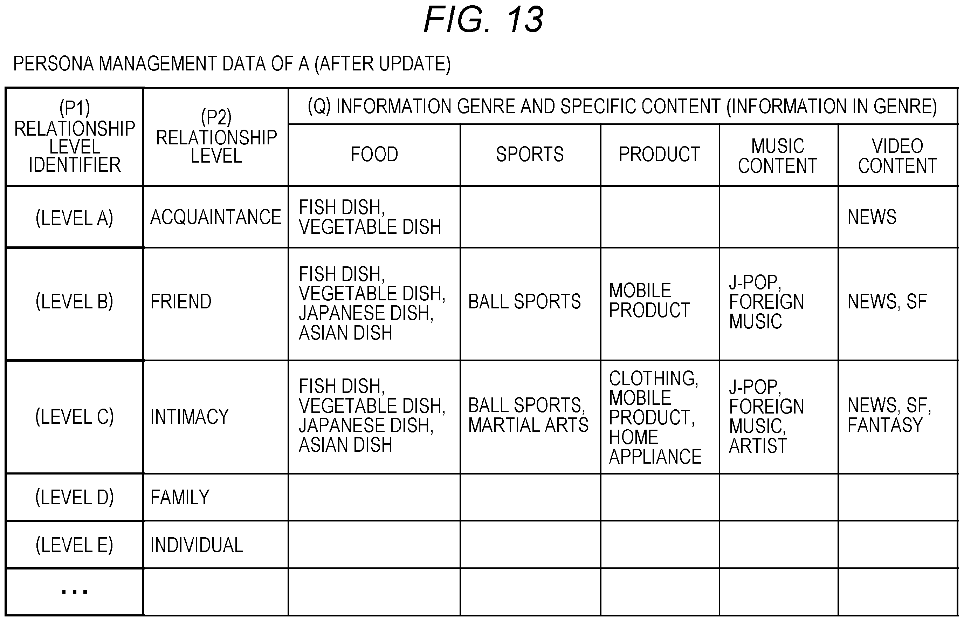

The persona management data of the user A as a result of the updating on the basis of the search information, the action information, and the like of the user A is, for example, data illustrated in Fig. 13.

The persona management data of the user A illustrated in Fig. 13 has the following settings.
(P) Relationship level = (A) acquaintance
(Q) Shareable [genre (specific content)] =
[Food (fish dish, vegetables dish)],
[Video content (news)]

(P) Relationship level = (B) friend
(Q) Shareable [genre (specific content)] = [Food (fish dish, vegetable dish, Japanese dish, Asian dish)], [Sports (ball sports)],
[Product (mobile product)],
[Music content (J-POP, foreign music)],
[Video content (news, SF)],

(P) Relationship level = (C) Intimacy
(Q) Shareable [genre (specific content)]
[Food (fish dish, vegetable dish, Japanese dish, Asian dish)], [Sports (ball sports, martial arts)],
[Product (clothing, mobile product, home appliance)],
[Music content (J-POP, foreign music, artist)],
[Video content (news, SF, fantasy)],

Note that the persona management data generation and update unit 12 and the external information acquisition unit 11 of the information processing apparatus 10 calculate the frequency of performing of each processing from the user's action record, and register content performed in low frequency, but is performed over a certain period of time to a layer of the intimacy level or higher.

Conversely, content performed in very high frequency is registered to the layer of the acquaintance level.

### [3. Configuration example and processing sequence of information processing apparatus]

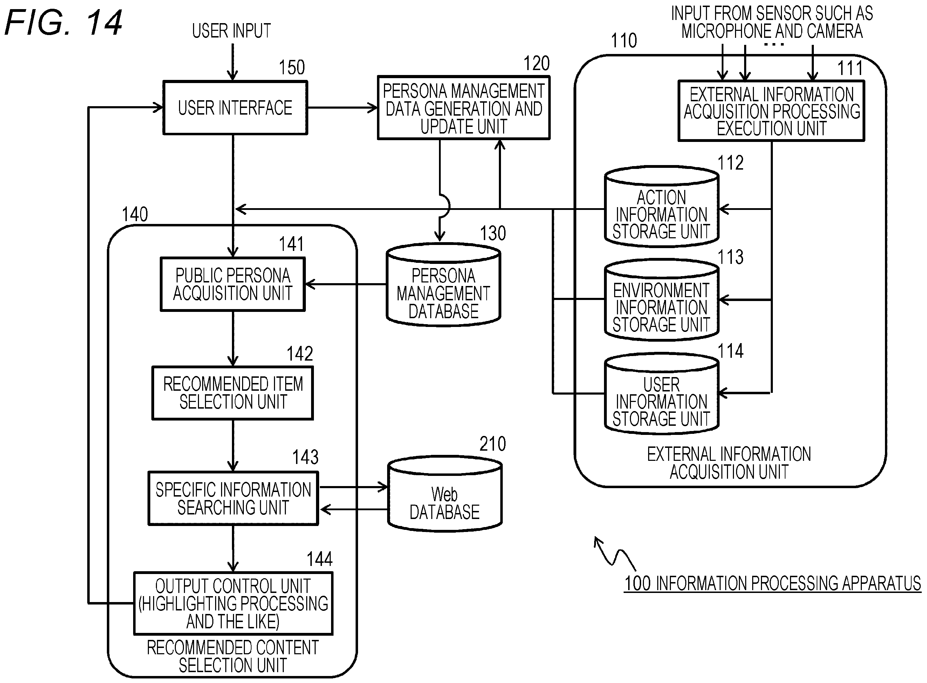

Next, a configuration example and a processing sequence of the information processing apparatus will be described with reference to Fig. 14 and subsequent drawings.

Fig. 14 is a block diagram illustrating a specific configuration of an information processing apparatus 100 according to the present embodiment.

Fig. 14 is a block diagram illustrating the information processing apparatus 10 described above with reference to Fig. 1 in further detail, and is a block diagram illustrating blocks for each of functions to be executed and storage means.

The external information acquisition unit 11 illustrated in Fig. 1 corresponds to the external information acquisition unit 110 shown in Fig. 14.

The persona management data generation and update unit 12 illustrated in Fig. 1 corresponds to the persona management data generation and update unit 120 illustrated in Fig. 14.

The persona management database 13 illustrated in Fig. 1 corresponds to the persona management database 130 illustrated in Fig. 14.

The recommended content selection unit 14 illustrated in Fig. 1 corresponds to the recommended content selection unit 140 illustrated in Fig. 14.

The output unit 15 illustrated in Fig. 1 corresponds to the user interface 150 illustrated in Fig. 14.

The Web database 21 illustrated in Fig. 1 corresponds to a Web database 210 illustrated in Fig. 14.

As illustrated in Fig. 14, the information processing apparatus 100 of the present disclosure includes an external information acquisition unit 110, a persona management data generation and update unit 120, a persona management database 130, a recommended content selection unit 140, and a user interface 150.

The external information acquisition unit 110 includes an external information acquisition processing execution unit 111, an action information storage unit 112, an environment information storage unit 113, and a user information storage unit 114.

The external information acquisition processing execution unit 111 acquires, for example, information recorded in a camera, a microphone, another sensor, or an external database and the like.

For example, the external information acquisition processing execution unit 111 acquires action information of various users, for example, action information such as the restaurant at which a user ate, the place a user went on a trip, the kind of sports a user watched, the kind of TV viewing, music listening, or data search performed by a user, and stores the action information in the action information storage unit 112.

Furthermore, the external information acquisition processing execution unit 111 acquires environment information such as weather and user position information and stores the environment information in the environment information storage unit 113.

Moreover, the external information acquisition processing execution unit 111 acquires user information such as a user's face information acquired by a camera device, a user's body temperature detected by a temperature sensor, and a contact list acquired from a telephone directory or the like recorded on a mobile terminal or the like owned by the user, and stores the user information in the user information storage unit 114.

Note that the external information acquisition processing execution unit 111 performs, for example, face recognition processing, performs matching processing of the user's face information imaged by a camera and the user's face previously stored in the user information storage unit 114, and performs user identification processing for determining who the user is.

On the basis of the identification data, the user-based action information associated with the user identifier is stored in the action information storage unit 112.

In a case where the information stored in other storage units is also information associated with the identified user, the information is stored in association with the user identifier.

Note that the information acquired by the external information acquisition unit 110 is not information of a specific user, but information of many users.

This is all information that can be acquired by a sensor such as a camera of the information processing apparatus 100.

Note that, although the information processing apparatus 100 can be configured as a mobile terminal such as a user's smartphone, the information processing apparatus 100 can be configured to perform some functions in a server.

For example, the information processing apparatus 100 may be configured such that a server connected to a user terminal such as a large number of smartphones via a network collects various user's action information, environment information, and user information acquired from each user terminal, and stores the collected information into the action information storage unit 112, the environment information storage unit 113 and the user information storage unit 114.

The persona management data generation and update unit 120 uses the information acquired by the external information acquisition unit 110, that is, the information stored in the action information storage unit 112, the environment information storage unit 113, and the user information storage unit 114 to generate the persona data indicating the characteristics of each user and store the persona data in the persona management database 130.

Note that, as described above, persona data is information indicating hobby and preference information of each user, and further is information indicating personal characteristics such as occupation, age, gender, personality, or behavioral habits of each user.

Specifically, for example, it is information on favorite foods, sports, artists, songs, and the like.

The persona management data generated by the persona management data generation and update unit 120 is, for example, the user-based persona management data described above with reference to Fig. 6 and the like.

That is, the persona management data is correspondence data of the following data.

(Data P) Relationship level ((A) acquaintance to (E) individual)
(Data Q) Shareable information [genre (specific content)]

Note that the persona management data generation and update unit 120 also estimates the relationship between users on the basis of the information acquired by the external information acquisition unit 110, and stores also the relationship information between users in the persona management database 130. That is, the relationship information is the following relationship level information described above with reference to Fig. 3.

User relationship level A = acquaintance = acquaintance state like knowing each other

User relationship level B = friend = acquaintance state like spending time in the same place,

This level B (friend) can be set by further subdividing by age (age 12 to 18: junior high and high school).

User relationship level C = intimacy = state of friendship deeper than friend

User relationship level D = family = state almost the same as family relationship

User relationship level E = individual = state the same as user himself/herself

Note that the user can perform edit processing such as change or deletion for the persona management data and the user relationship level information stored in the persona management database 130 by accessing the user management data generation update unit 120 via the user interface 150.

However, in a case where edit processing such as change or deletion is performed, the persona management data generation and update unit 120 performs user authentication, and with the establishment of the authentication, editing such as change or deletion of only the relevant information of the identified person is permitted.

The persona management database 130 is a database that stores the persona generated and updated by the persona management data generation and update unit 12.

The recommended content selection unit 140 selects content to be recommended using the persona information stored in the persona management database 130, that is, for example, the user-based persona management data described above with reference to Fig. 6 and the like.

As illustrated in Fig. 14, the recommended content selection unit 140 includes a public persona acquisition unit 141, a recommended item selection unit 142, a specific information searching unit 143, and an output control unit (highlight processing and the like) 144.

When a request to acquire persona information of a specific user is input via the user interface 150, the public persona acquisition unit 141 performs processing of acquiring persona information stored in the persona management database 130.

Alternatively, in accordance with the user information input from the external information acquisition unit 110, the public persona acquisition unit 141 performs processing of acquiring persona information stored in the persona management database 130.

For example, on the basis of the input information of the external information acquisition unit 110, in a case where the analysis information that the users A, B, and C are together, for example, walking side by side is acquired, the public persona acquisition unit 141 performs processing of acquiring persona information of these users A to C.

For example, the public persona acquisition unit 141 selects and acquires only information permitted to be published according to the relationship level between the persona acquisition request user and the user of the persona management data to be acquired, from the user-based persona management data described above with reference to Fig. 6 and the like.

Note that the relationship level information between users is also stored in the persona management database 130.

In a case where a request for acquiring persona information is made via the user interface 150, the public persona acquisition unit 141 selects and acquires only information permitted to be published according to the relationship level between the persona acquisition request user and the user of the persona management data to be acquired.

Furthermore, as described above, in a case of performing processing of acquiring the persona information of the users A to C on the basis of the determination that the users A, B, and C are together, the public persona acquisition unit 141 selects and acquires only information permitted to be published to all of the users A to C on the basis of the relationship level among all of the users A to C.

For example, in a case where the relationship level between users is A = acquaintance, the public persona acquisition unit 141 selects and acquires persona information set as shared information of the acquaintance level from the persona management data of the user whose persona is to be acquired.

Furthermore, for example, in a case where the relationship level between users is C = intimacy, the public persona acquisition unit 141 selects and acquires persona information set as shared information of the intimacy level from the persona management data of the user whose persona is to be acquired.

The persona information acquired by the public persona acquisition unit 141 is input to the recommended item selection unit 142.

For example, in a case of acquiring the persona management data corresponding to a plurality of users (only the public permission information) from the persona management database 130, the recommended item selection unit 142 selects data common to pieces of persona management data from the persona management data corresponding to the plurality of users, and sets the common data as a recommended item.

This is processing of selecting an item of matched interest and preference.

Note that the recommended content selection unit 142 can also perform processing of selecting information that matches the preference and action information of the browsing user of the recommended content acquired via the external information acquisition unit 110 and setting the selected information as the recommended content.

Note that the items that are the recommended data configuration information are, for example, divided into a plurality of information genres and specific content (information in genre) as described above with reference to Fig. 5, and the recommended content selection unit 142 selects from these information and the specific content (information in genre), items (information genre and specific content (information in genre)) that are commonly set in the acquired persona management data corresponding to a plurality of users.

This selection information is output to specific information searching unit 143.

The specific information searching unit 143 performs a data search based on items (information genre and specific content (information in genre)) that are commonly set in the persona management data corresponding to a plurality of users input from the recommended item selection unit 142.

A search is performed using the Web database 210 illustrated in Fig. 14.

This processing is processing corresponding to the processing described above with reference to Fig. 11.

That is, crawling (searching and saving) of the Web database 21 is performed using items (information genre and specific content (information in genre)) that are commonly set in the persona management data corresponding to a plurality of users as keywords.

As a result of the crawling (searching and saving), a specific dish, for example, as illustrated in Fig. 11, is searched.

The specific information searching unit 143 causes highlight display of the result on the user interface 150, that is, the display unit via the output control unit (highlight display or the like) 144.

Note that the display processing is not limited to the highlight display, and various modes such as a list display or a display of map information of a restaurant providing the recommended dish, for example are possible.

By looking at these display results, for example, a group including a plurality of users A, B, and C can immediately detect a restaurant that provides a dish that all users like.

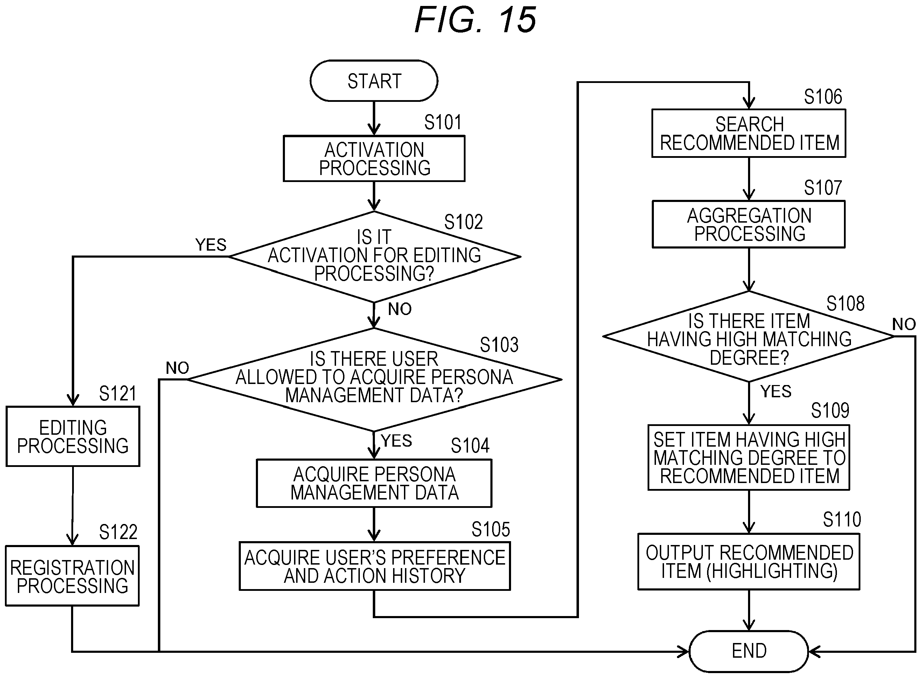

Next, a sequence of processing performed by the information processing apparatus 100 of the present disclosure will be described with reference to a flowchart illustrated in Fig. 15.

Note that the processing according to the flow illustrated in Fig. 15 is performed under the control of a control unit having a program execution function, for example, according to a program stored in a storage unit of the information processing apparatus 100.

Hereinafter, processing of each step will be sequentially described.

### (Step S101)

First, in step S101, activation processing is performed by a user operation.

Alternatively, an activation processing may be performed according to detection of a person by a sensor of the user, for example.

### (Step S102)

Next, determination is made on whether or not the activation processing is performed as editing processing of data stored in the database, for example, editing processing of the persona management data corresponding to the user described above with reference to Fig. 6 and the like, or the registered data related to the relationship level between users described above with reference to Figs. 3 and 4.

This is determined by, for example, whether or not the user has issued a request to perform editing processing.

In a case where the activation is for the purpose of editing processing, the editing processing is performed in step S121, and the processing of storing the edited data in the persona management database 130 is performed in step S122.

Note that, as described above, in a case where edit processing is performed, the persona management data generation and update unit 120 performs user authentication, and with the establishment of the authentication, editing such as change or deletion of only the relevant information of the identified person is permitted.

### (Step S103)

In a case where it is determined in step S102 that the activation process is not the editing processing of the data stored in the database, the process proceeds to step S103, and it is determined whether or not the acquisition of the persona management data from the persona management database 130 is possible.

This determination processing is processing performed by the public persona acquisition unit 141 of the recommended content selection unit 140 illustrated in Fig. 15.

The public persona acquisition unit 141 performs processing of determining whether or not the persona management data of the specific user via the user interface 150 includes persona data permitted to be published to the acquisition request user, for example.

Alternatively, as described above with reference to Fig. 14, in a case where it is analyzed from the input information of the external information acquisition unit 110 that the users A, B, and C are together, it is determined whether or not there is publication permitted persona management data of the users A to C according to all the relationship levels of the users A to C.

In a case where there is publication permitted persona management data, the process proceeds to step S104.

In a case where there is no publication permitted persona management data, the processing ends.

### (Step S104)

In a case where it is determined in step S103 that there is publication permitted persona management data, the process proceeds to step S104, and persona management data permitted to be published is acquired from the persona management database 130.

For example, in a case where there are users A to C, and in a case where the relationship levels of users A to C are all intimacy levels (relationship level C), the publication permission information corresponding to the intimacy level in the persona management data of three users A to C is selected and acquired.

### (Step S105)

Next, in step S105, user's preference and action history are acquired.

This processing is performed to determine a recommended item using the latest user's preference and action information acquired at the present time.

In a case where the processing of determining the recommended item is performed using only the persona management data, the processing can be omitted.

For example, in a case where the persona management data of the three users A to C is acquired in step S104, the preference and action information of the users A to C is further acquired from the acquired information of the external information acquisition unit 110 in step S105.

### (Step S106)

In step S106, recommendation item determination processing is performed. This processing is processing performed by the recommended item selection unit 142 of the recommended content selection unit 140 described with reference to Fig. 14.

For example, in a case of acquiring the persona management data corresponding to a plurality of users from the persona management database 130, the recommended item selection unit 142 selects common data from the persona management data corresponding to the plurality of users. For example, the recommended item selection unit 142 selects a matching recommended item.

This is processing of selecting an item of matched interest and preference.

The item is an item that is divided into a plurality of information genres described above with reference to Fig. 5 and specific content (information in genre).

Note that, in step S105, in a case of acquiring the user's preference and action information, the recommended item selection unit selects a recommendation item that matches preference from the persona management data corresponding to the plurality of users acquired from the persona management database 130 and the user's preference and action information.

Note that the persona management data is, as described above with reference to Fig. 6 and the like, data in which publication permission information corresponding to a relationship level according to the relationship level between users is registered. The recommended item selection unit 142 of the recommended content selection unit 140 performs processing of selecting a recommended item (recommended content) from the range of the publication permission information determined on the basis of the relationship level of the plurality of users corresponding to the plurality of pieces of persona management data acquired from the persona management database 130.

### (Step S107)

In step S107, aggregation processing is performed in which the items selected in step S106 are arranged in descending order of the degree of matching.

### (Step S108)

In step S108, it is determined whether or not there is an item having a matching degree higher than a predetermined threshold.

In a case where there is, the process proceeds to step S109. In a case where there is not, the processing ends.

### (Step S109)

In a case where it is determined in step S108 that there is an item having a higher degree of matching than a predetermined threshold, in step S109, the item having the higher degree of matching is determined as a recommended item (recommended content).

### (Step S110)

Next, in step S110, highlight display of the item (recommended content) having a high degree of matching selected in step S109 is performed on the user interface 150, that is, the display unit via the output control unit (highlight display or the like) 144.

Note that the display processing is not limited to the highlight display, and various modes such as a list display or a display of map information of a restaurant providing the recommended dish, for example are possible.

### [4. Configuration example and processing sequence of information processing apparatus that outputs advertisement]

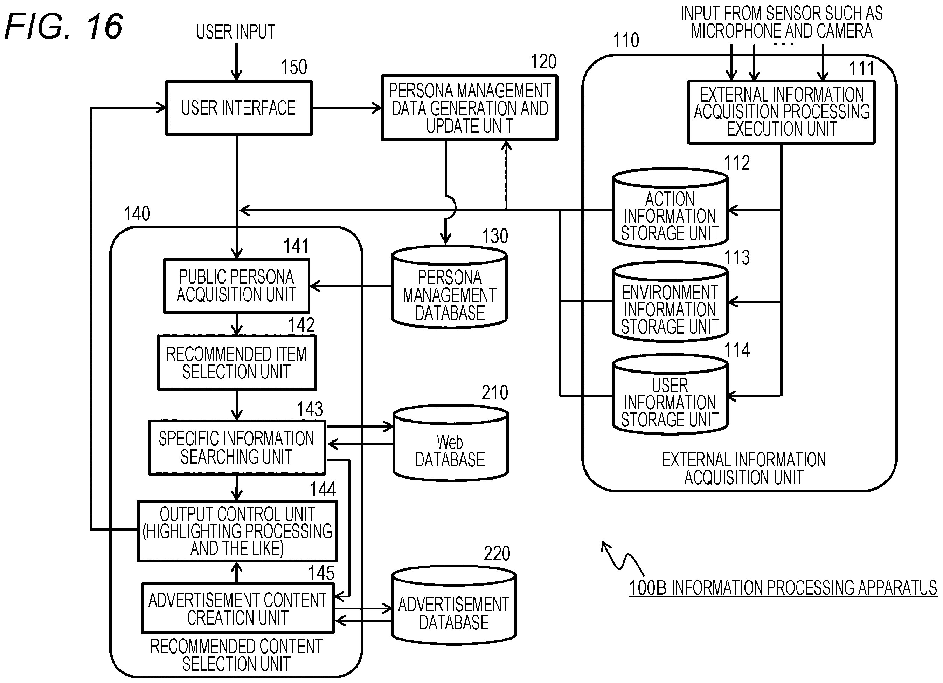

Next, a configuration example and a processing sequence of an information processing apparatus that outputs an advertisement will be described with reference to Fig. 16 and subsequent drawings.

Fig. 16 is a block diagram illustrating a detailed configuration of an information processing apparatus 100B that outputs an advertisement according to the present embodiment.

The information processing apparatus 100B illustrated in Fig. 16 has a configuration substantially similar to that of the information processing apparatus 100 described above with reference to Fig. 14.

The difference is that the recommended content selection unit 140 includes an advertisement content creation unit 145.

Only this difference will be described.

The advertisement content creation unit 145 of the recommended content selection unit 140 is configured such that the specific information searching unit 143 inputs the result information of the data search based on the items (information genre and specific content (information in genre)) set commonly to the persona management data corresponding to the plurality of users that has been input from the recommended item selection unit 142.

The advertisement content creation unit 145 performs a search of the advertisement database 220 on the basis of the input information, and selects and acquires an advertisement corresponding to items (information genre and specific content (information in genre)) commonly set in the persona management data corresponding to the plurality of users that has been input from the recommended item selection unit 142.

Specifically, for example, in a case where the item (information genre and specific content (information in genre)) commonly set in the persona management data corresponding to the plurality of users input from the recommended item selection unit 142 is information such as Japanese dish or sushi, the advertisement content creation unit 145 searches advertisement information of a Japanese restaurant, a restaurant providing sushi, or the like, and outputs the search result to the user interface via the output control unit.

In the present embodiment, not only presentation of recommended item information that matches the user's preference, but also advertisement of a product corresponding to the recommended item, advertisement of a store that sells the product, advertisement of a restaurant that provides food, and the like can be presented to the user.

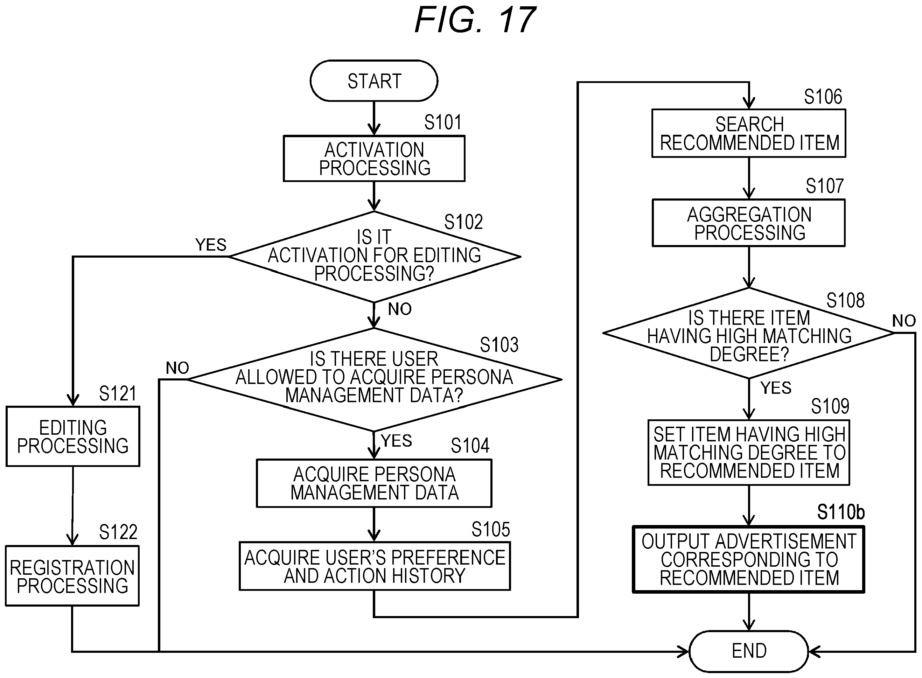

A sequence of a process using the information processing apparatus B100 illustrated in Fig. 16 will be described with reference to a flowchart illustrated in Fig. 17.

The flowchart illustrated in Fig. 17 is almost similar to the flowchart illustrated in Fig. 15 described above.

Only the processing in step S110b after step S109 is different.

The processing in step S110b will be described.

### (Step S110b)

The processing of step S110b is processing performed by the advertisement content creation unit 145 in the recommended content selection unit 140 illustrated in Fig. 16.

In a case where it is determined in the preceding step S108 that there is an item having a higher matching degree than a predetermined threshold, in step S109, processing of determining the item having the higher matching degree as a recommended item is performed.

The advertisement content creation unit 145 performs advertisement search processing based on the item having a high degree of matching selected in step S109.

That is, the advertisement content creation unit 145 performs a search of the advertisement database 220, performs the advertisement search using, as a keyword, the item (information genre and specific content (information in genre)) commonly set in the persona management data corresponding to a plurality of users that has been input from the recommended item selection unit 142, and selects and acquires the advertisement.

For example, the advertisement content creation unit 145 performs an advertisement search based on information such as Japanese dish or sushi.

The advertisement information of a Japanese restaurant, a restaurant providing sushi, or the like acquired as the search result is searched, and the search result is output to the user interface via the output control unit.

### [5. Example of change processing of persona management data acquisition processing according to user change]

Next, an example of change processing of the persona management data acquisition processing according to the user change will be described.

As described above with reference to Fig. 14, in a case where the users A, B, and C are together, the public persona acquisition unit 141 of the recommended content selection unit 140 acquires the persona management data of each of the users A to C from the persona management database 120.

Here, for example, in a case where the smartphone of the user A is configured to perform at least a part of the functions of the information processing apparatus 100 illustrated in Fig. 14, at time T1, when the user A and the user B are together and the processing according to the flow illustrated in Fig. 15 is performed, the processing of acquiring the persona management data of two of the user A and the user B from the persona management database 130 is performed.

In a case where the user C is newly added to the place where the users A and B are present during the execution of this processing, the information processing apparatus performs processing of acquiring the persona management data of the user C from the database as additional processing.

The fact that the user C is newly added can be identified by the acquired information from the external information acquisition unit 110.

Alternatively, the fact may be detected by an input by the user A via the user interface 150.

As described above, the persona management data to be processed is dynamically changed according to the users who are together.

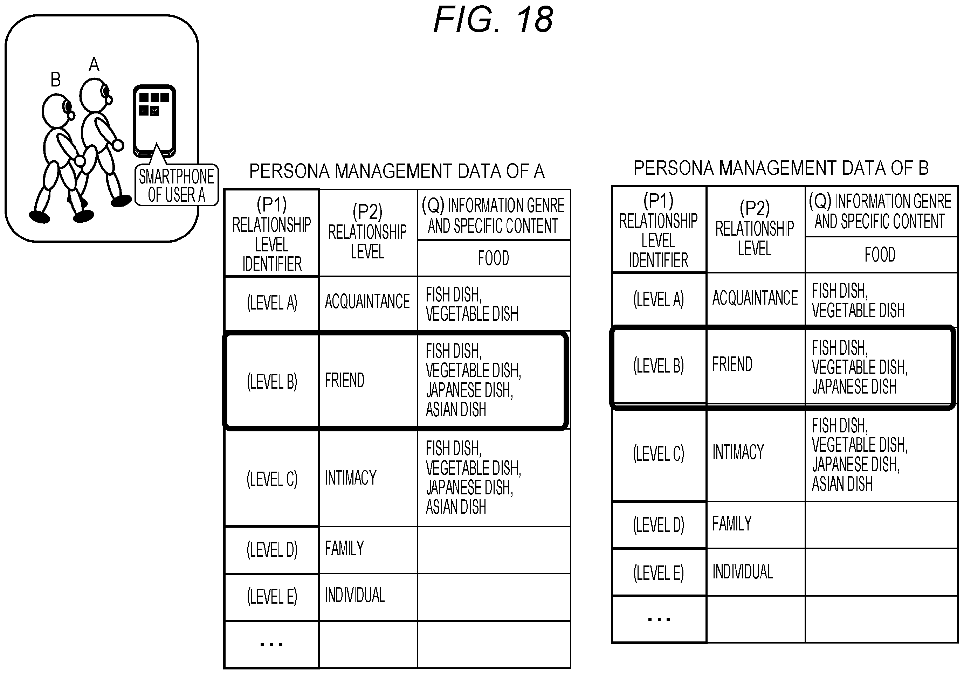

A specific example will be described with reference to Fig. 18 and subsequent drawings.

Fig. 18 is a diagram for explaining a processing example in a case where the users A and B are walking together and the smartphone of user A is configured to perform at least a part of the functions of the information processing apparatus 100 illustrated in Fig. 14.

When the user A and B are together and the processing according to the flow illustrated in Fig. 15 is performed, the processing of acquiring the persona management data of two of the users A and B from the persona management database 130 is performed.

In this case, only the information corresponding to the relationship level between the users A and B is acquired, and the recommended items are determined according to the selected information and displayed on the smartphone of the user A.

Assuming that the relationship level between the users A and B is the level B (friend), as illustrated in Fig. 18,
the shared information corresponding to the level B (friend) in the persona management data of the user A is set to a selection target of the recommended item.

Similarly, the shared information corresponding to the level B (friend) in the persona management data of the user B is set to a selection target of the recommended item.

The recommended content selection unit 140 selects an item having a high degree of matching from these selection targets as a recommended item, searches the Web database 210, and outputs the search result to be displayed on the interface, which is the smartphone of the user A in the example in the drawing.

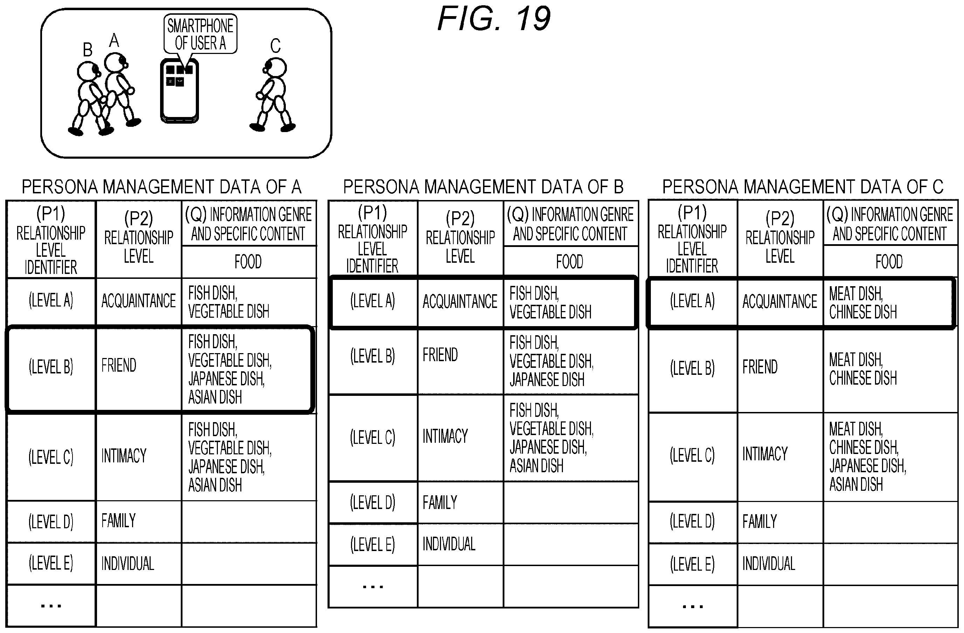

Here, as illustrated in Fig. 19, it is assumed that the user C approaches a place where the user A and the user B are together.

In this setting, it is assumed that the camera function of the smartphone of the user A images the face of the user C, and the external information acquisition unit identifies the user C.

When this user identification information is input to the public persona acquisition unit 141 of the recommended content selection unit 140, the public persona acquisition unit 141 acquires persona management data of user C from the persona management database 130.

Note that it is assumed that the relationship level of the users A and B is the level B (friend), and
the relationship level of the users A and C is also the level B (friend).

However, it is assumed that the relationship level between the users B and C is the level A (acquaintance).

In this case, as illustrated in Fig. 19,
the shared information corresponding to the level B (friend) in the persona management data of the user A is set to a selection target of the recommended item.

On the other hand, with regard to the persona management data of the users B and C, shared information corresponding to the level A (acquaintance) is set to a selection target of the recommended item.

The recommended content selection unit 140 selects an item having a high degree of matching from these selection targets as a recommended item, searches the Web database 210, and outputs the search result to be displayed on the interface, which is the smartphone of the user A in the example in the drawing.

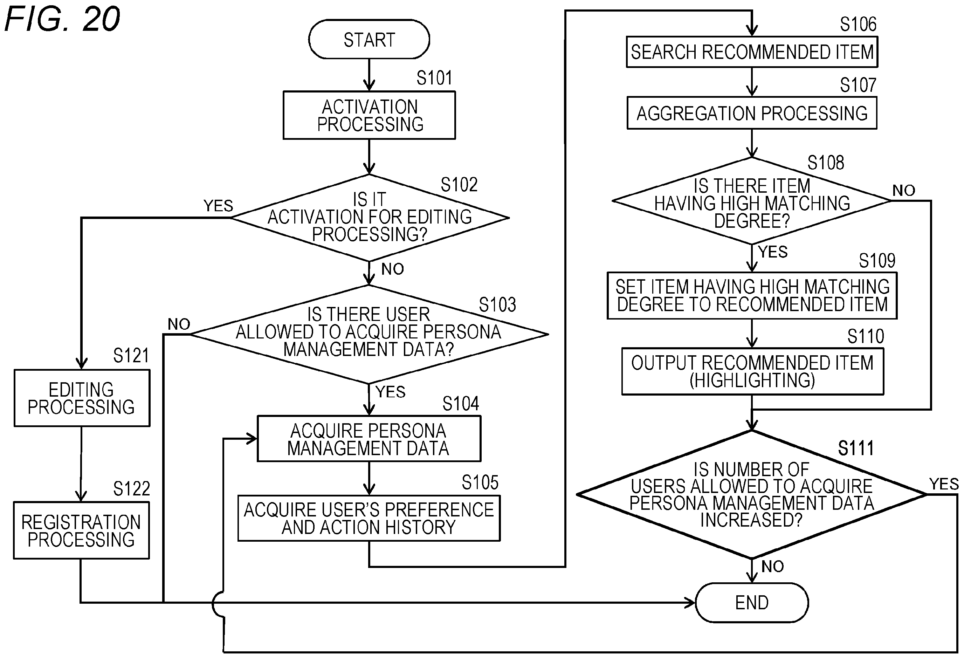

A processing sequence for performing this processing will be described with reference to a flowchart illustrated in Fig. 20.

The flowchart illustrated in Fig. 20 is almost similar to the flowchart illustrated in Fig. 15 described above.

Only the processing in step S111 after step S110 is different.

The processing in step S111 will be described.

### (Step S111)

The processing in step S111 is processing performed by the public persona acquisition unit 141 in the recommended content selection unit 140 illustrated in Fig. 16.

In step S111, the public persona acquisition unit 141 in the recommended content selection unit 140 determines whether or not the number of users allowed to acquire persona management data has been increased.

In a case where the number has not increased, the processing ends.

On the other hand, in a case where it is determined that the number has been increased, the process proceeds to step S104.

The processing of determining whether or not the number of users allowed to acquire persona management data has been increased is performed on the basis of acquired information from the external information acquisition unit 110. For example, the camera function of the smartphone of the user A images the face of the user C, and the external information acquisition unit 110 identifies the user C. When this user identification information is input to the public persona acquisition unit 141 of the recommended content selection unit 140, the public persona acquisition unit 141 determines that the number of users allowed to acquire the persona management data has been increased.

When this determination processing is performed, the process proceeds to step S104, and the persona management data corresponding to the increased number of users is acquired from the persona management database 130.

Note that the acquisition target information is determined on the basis of the relationship level with other users.

By performing such processing as described above, acquisition processing of optimal persona information corresponding to an increase or decrease in the number of users is performed.

### [6. Configuration example of information processing apparatus and information processing system]

Although the configuration example of the information processing apparatus has been described with reference to Figs. 1, 14, and 16, all of the functions illustrated in Figs. 1, 14, and 16 can be configured in one apparatus, for example, an apparatus such as a smartphone or a PC owned by the user, and the functions can be configured such that a part of the functions is performed in a server or the like.

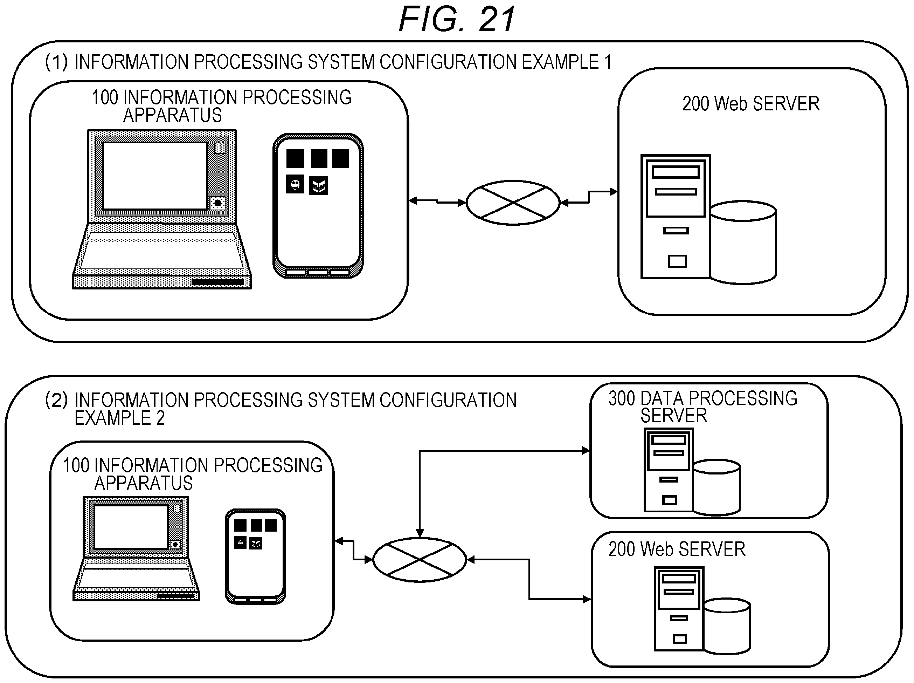

Fig. 21 illustrates a system configuration example.

Fig. 21(1) An information processing system configuration example 1 is an example in which the functions illustrated in Figs. 1, 14 and 16 are all configured in one apparatus, for example, a device such as a smartphone or a PC owned by the user.

The smartphone or PC owned by the user performs a data search by communicating with the Web server (Web database) 200 only in a case of performing a data search.

The information processing system configuration example 2 of Fig. 21(2) is an example of a system having a configuration in which a part of the functions illustrated in Figs. 1, 14 and 16 is configured in a user device such as a smartphone or a PC owned by the user, and a part of the functions is performed in a data processing server 300 capable of communicating with the user device.

For example, a configuration is possible in which only the user interface 150 and a part of the functions of the external information acquisition unit 110, for example, only a camera function or a sensor function illustrated in Fig. 14 are provided on the user terminal side, and all other functions are performed on the server side.

By using the system illustrated in Fig. 21(2), for example, the following processing can be performed.

The external information acquired by the external information acquisition unit provided in the user terminal such as a smartphone or a PC is transmitted to the data processing server.

The data processing server performs processing of acquiring the user-based persona management data corresponding to the user specified on the basis of the external information received from the user terminal from the persona management database, acquiring the publication permission information of the persona management data, and setting the data common among pieces of the persona management data as the recommended content.

Moreover, the user terminal acquires at least the identification information of the user and the action information of the user, and transmits the acquired information to the server. The server generates or updates persona management data on the basis of the identification information of the user received and the action information of the user from the user terminal.

Such processing is possible.

Note that various different settings are possible for the function division mode of the user terminal side function and the server side function, and a configuration in which one function is performed by both sides is also possible.

### [7. Hardware configuration example of information processing apparatus]

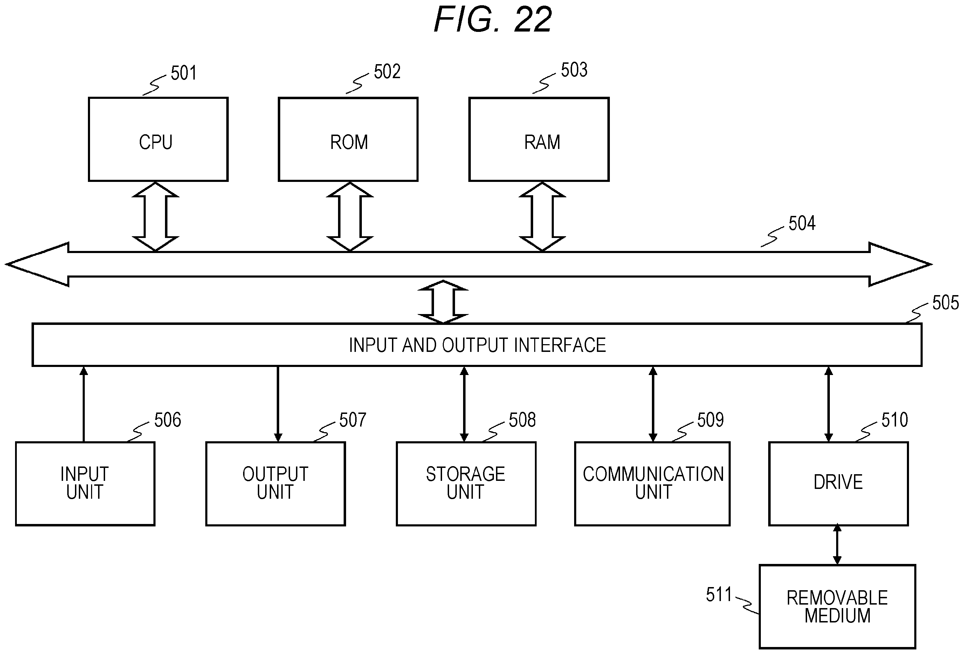

Next, a hardware configuration example of the information processing apparatus will be described with reference to Fig. 22.

The hardware described with reference to Fig. 22 has the configuration of the information processing apparatus described above with reference to Figs. 1, 14, and 16, and is an example of the hardware configuration of the information processing apparatus composing the data processing server 300 described with reference to Fig. 21.

A central processing unit (CPU) 501 functions as a control unit or a data processing unit that performs various types of processing according to a program stored in a read only memory (ROM) 502 or a storage unit 508. For example, processing according to the sequence described in the above-described embodiment is performed. A random access memory (RAM) 503 stores programs executed by the CPU 501, data, and the like. The CPU 501, the ROM 502, and the RAM 503 are mutually connected via a bus 504.

The CPU 501 is connected to an input and output interface 505 via a bus 504, the input and output interface 505 is connected to an input unit 506 including various types switches, a keyboard, a mouse, a microphone, a sensor, and the like, and an output unit 507 including a display, a speaker, and the like. The CPU 501 performs various types of processing correspondingly to a command input from the input unit 506, and outputs a processing result to, for example, the output unit 507.

The storage unit 508 connected to the input and output interface 505 includes, for example, a hard disk or the like, and stores a program executed by the CPU 501 and various types of data. The communication unit 509 functions as a transmission and reception unit for Wi-Fi communication, Bluetooth (registered trademark) (BT) communication, and other data communication via a network such as the Internet or a local area network, and communicates with an external device.

A drive 510 connected to the input and output interface 505 drives a removable medium 511 such as a magnetic disk, an optical disk, a magneto-optical disk, or a semiconductor memory such as a memory card to record or read data.

### [8. Summary of configuration of present disclosure]

As described above, the embodiments of the present disclosure have been described in detail with reference to specific embodiments. However, it is obvious that those skilled in the art can make modifications and substitutions of the embodiments without departing from the gist of the present disclosure. That is, the present invention has been disclosed in the form of exemplification, and should not be interpreted in a limited manner. In order to determine the gist of the present disclosure, the column of the scope of claims should be taken into consideration.

Note that the technology disclosed in this specification can take the following configurations.
(1) An information processing apparatus including
   a recommended content selection unit that acquires user-based persona management data from a persona management database that stores the user-based persona management data, and selects recommended content from the persona management data that has been acquired,
   in which the recommended content selection unit
   acquires a plurality of pieces of the persona management data corresponding to a plurality of users, respectively, from the persona management database, and selects data common among the plurality of pieces of persona management data that has been acquired, as the recommended content.
(2) The information processing apparatus according to (1), in which
   the persona management data is data in which publication permission information corresponding to a relationship level according to a relationship level between users is registered, and
   the recommended content selection unit
   selects recommended content from a range of publication permission information determined on the basis of the relationship level of the plurality of users corresponding to the plurality of pieces of persona management data acquired.
(3) The information processing apparatus according to (2), in which
   there are a plurality of different levels of the relationship level between users depending on an intimacy degree, and
   the persona management data
   has a setting in which, as the relationship level has a higher intimacy degree, the publication permission information increases.
(4) The information processing apparatus according to any one of (1) to (3), in which
   the persona management data is
   data including at least preference information of a user.
(5) The information processing apparatus according to any one of (1) to (4), in which
   the recommended content selection unit
   acquires preference information of a browsing user of the recommended content, and sets content having a high degree of matching with preference acquired, as the recommended content.
(6) The information processing apparatus according to any one of (1) to (5), in which
   the recommended content selection unit
   acquires a plurality of pieces of the persona management data corresponding to a plurality of users, respectively, from the persona management database, and performs data search processing using data acquired, and
   sets result data of the data search processing as the recommended content.
(7) The information processing apparatus according to any one of (1) to (6), in which
   the recommended content selection unit
   acquires a plurality of pieces of the persona management data corresponding to a plurality of users, respectively, from the persona management database, and performs advertisement data search processing using data acquired, and
   outputs advertisement data acquired as a result of the advertisement data search processing.
(8) The information processing apparatus according to any one of (1) to (7), further including
   an external information acquisition unit, and
   a persona management data generation and update unit that generates or updates the persona management data on the basis of external information acquired by the external information acquisition unit.
(9) The information processing apparatus according to (8), in which
   the external information acquisition unit
   acquires at least identification information of the user and action information of the user, and
   the persona management data generation and update unit
   generates or updates the persona management data on the basis of the identification information of the user and the action information of the user acquired by the external information acquisition unit.
(10) The information processing apparatus according to (8) or (9), in which
   the persona management data generation and update unit
   estimates the relationship level between the users on the basis of the identification information of the user and the action information of the user acquired by the external information acquisition unit.
(11) The information processing apparatus according to any one of (1) to (1), in which
   the recommended content selection unit
   acquires user identification information from external information acquired by an external information acquisition unit, and acquires the persona management data of the user corresponding to the user identification information acquired, from the persona management database.
(12) The information processing apparatus according to any one of (1) to (11), in which
   the recommended content selection unit,
   in a case where a new identification user is detected on the basis of the external information acquired by an external information acquisition unit, additionally acquires the persona management data of the new identification user from the persona management database.
(13) An information processing system including
   a user terminal and a data processing server,
   in which the user terminal
   transmits external information acquired by an external information acquisition unit to the data processing server, and
   the data processing server
   receives the external information from the user terminal and
   acquires a plurality of pieces of user-based persona management data corresponding to a plurality of users specified on the basis of the external information from a persona management database, selects data common among the plurality of pieces of persona management data that has been acquired, as recommended content, and transmits the recommended content to the user terminal.
(14) The information processing system according to (13), in which
   the persona management data is data in which publication permission information corresponding to a relationship level according to the relationship level between users is registered, and
   the data processing server
   selects the recommended content from a range of publication permission information determined on the basis of a relationship level of the plurality of users corresponding to the plurality of pieces of persona management data acquired from the persona management database.
(15) The information processing system according to (13) or (14), in which
   the data processing server includes
   a persona management data generation and update unit that generates or updates the persona management data on the basis of the external information received from the user terminal.
(16) The information processing system according to (15), in which
   the user terminal
   acquires at least identification information of the user and action information of the user and transmits the at least identification information of the user and action information of the user to the data processing server, and
   the persona management data generation and update unit of the data processing server
   generates or updates the persona management data on the basis of the identification information of the user and the action information of the user received from the user terminal.
(17) An information processing method performed in an information processing apparatus,
   in which a recommended content selection unit of the information processing apparatus
   performs recommended content selection processing of acquiring user-based persona management data from a persona management database storing the user-based persona management data, and selecting recommended content from the persona management data that has been acquired, and
   the recommended content selection unit, in the recommended content selection processing,
   acquires a plurality of pieces of the persona management data corresponding to a plurality of users, respectively, from the persona management database and selects data common among the plurality of pieces of persona management data that has been acquired, as recommended content.
(18) An information processing method performed in a data processing server that performs communication with a user terminal,
   the information processing method including:
   receiving external information acquired by the user terminal, and
   acquiring a plurality of pieces of user-based persona management data corresponding to a plurality of users specified on the basis of the external information from a persona management database, selecting data common among the plurality of pieces of persona management data that has been acquired, as recommended content, and transmitting the recommended content to the user terminal.
(19) A program causing information processing to be performed in an information processing apparatus,
   the program causing a recommended content selection unit of the information processing apparatus to
   perform processing of acquiring user-based persona management data from a persona management database storing the user-based persona management data, and recommended content selection processing of selecting recommended content from the persona management data that has been acquired, and,
   in the recommended content selection processing,
   perform processing of acquiring a plurality of pieces of the persona management data corresponding to a plurality of users, respectively, from the persona management database and selecting data common among the plurality of pieces of persona management data that has been acquired, as recommended content.
(20) A program that causes information processing to be performed in a data processing server that performs communication with a user terminal,
   the program causing execution of
   reception processing of external information acquired by the user terminal,
   processing of acquiring a plurality of pieces of user-based persona management data corresponding to a plurality of users specified on the basis of the external information from a persona management database, and
   processing of selecting data common among the plurality of pieces of persona management data that has been acquired, as recommended content, and transmitting the recommended content to the user terminal.

Furthermore, the series of processing described in the specification can be performed by hardware, software, or a combined configuration of both. In a case of performing processing by software, the program in which the processing sequence is recorded can be installed in a memory in a computer incorporated in dedicated hardware and executed, or the program can be installed on a general-purpose computer capable of performing various processing and executed. For example, the program can be recorded in advance on a recording medium. In addition to being installed on a computer from a recording medium, the program can be received via a network such as a local area network (LAN) or the Internet and installed on a recording medium such as a built-in hard disk.

Note that the various types of processing described in the specification are not only performed in time series according to the description, but may be performed in parallel or individually according to the processing capability of the apparatus that performs the processing or as necessary. Furthermore, in this specification, a system is a logical set configuration of a plurality of devices, and is not limited to one in which the devices of each configuration are in the same housing.

### INDUSTRIAL APPLICABILITY

As described above, according to the configuration of the embodiment of the present disclosure, a configuration is achieved that can perform processing of selecting and presenting content corresponding to preference of a plurality of users as recommended content.

Specifically, for example, the configuration has a recommended content selection unit that acquires user-based persona management data from a persona management database and selects recommended content from the acquired data. The recommended content selection unit acquires a plurality of pieces of the persona management data corresponding to a plurality of users, respectively, from the database, and selects data common among the plurality of pieces of persona management data that has been, as recommended content. The persona management data is data in which publication permission information corresponding to a relationship level corresponding to a relationship level between users is registered, and the recommended content selection unit selects recommended content from a range of the publication permission information determined on the basis of the relationship level.

According to this configuration, a configuration is achieved that enables processing of selecting and presenting content corresponding to preference of a plurality of users as recommended content.

### REFERENCE SIGNS LIST

- 10: Information processing apparatus
- 11: External information acquisition unit
- 12: Persona management data generation and update unit
- 13: Persona management database
- 14: Recommended content selection unit
- 15: Output unit
- 21: Web database
- 10: Information processing apparatus
- 110: External information acquisition unit
- 111: External information acquisition processing execution unit
- 112: Action information storage unit
- 113: Environment information storage unit
- 114: User information storage unit
- 120: Persona management data generation and update unit
- 130: Persona management database
- 140: Recommended content selection unit
- 141: Public persona acquisition unit
- 142: Recommended item selection unit
- 143: Specific information searching unit
- 144: Output control unit (highlight processing and the like)
- 150: User interface
- 200: Web server
- 210: Web database
- 300: Data processing server
- 501: CPU
- 502: ROM
- 503: RAM
- 504: Bus
- 505: Input and output interface
- 506: Input unit
- 507: Output unit
- 508: Storage unit
- 509: Communication unit
- 510: Drive
- 511: Removable medium

## Claims

1. An information processing apparatus comprising
a recommended content selection unit that acquires user-based persona management data from a persona management database that stores the user-based persona management data, and selects recommended content from the persona management data that has been acquired,
wherein the recommended content selection unit
acquires a plurality of pieces of the persona management data corresponding to a plurality of users, respectively, from the persona management database, and selects data common among the plurality of pieces of persona management data that has been acquired, as the recommended content.

2. The information processing apparatus according to claim 1, wherein
the persona management data is data in which publication permission information corresponding to a relationship level according to the relationship level between users is registered, and
the recommended content selection unit
selects recommended content from a range of the publication permission information determined on a basis of the relationship level of the plurality of users corresponding to the plurality of pieces of persona management data acquired.

3. The information processing apparatus according to claim 2, wherein
there are a plurality of different levels of the relationship level between users depending on an intimacy degree, and
the persona management data
has a setting in which, as the relationship level has a higher intimacy degree, the publication permission information increases.

4. The information processing apparatus according to claim 1, wherein
the persona management data is
data including at least preference information of a user.

5. The information processing apparatus according to claim 1, wherein
the recommended content selection unit
acquires preference information of a browsing user of the recommended content, and sets content having a high degree of matching with preference acquired, as the recommended content.

6. The information processing apparatus according to claim 1, wherein
the recommended content selection unit
acquires a plurality of pieces of the persona management data corresponding to a plurality of users, respectively, from the persona management database, and performs data search processing using data acquired, and
sets result data of the data search processing as the recommended content.

7. The information processing apparatus according to claim 1, wherein
the recommended content selection unit
acquires a plurality of pieces of the persona management data corresponding to a plurality of users, respectively, from the persona management database, and performs advertisement data search processing using data acquired, and
outputs advertisement data acquired as a result of the advertisement data search processing.

8. The information processing apparatus according to claim 1, further comprising
an external information acquisition unit, and
a persona management data generation and update unit that generates or updates the persona management data on a basis of external information acquired by the external information acquisition unit.

9. The information processing apparatus according to claim 8, wherein
the external information acquisition unit
acquires at least identification information of the user and action information of the user, and
the persona management data generation and update unit
generates or updates the persona management data on a basis of the identification information of the user and the action information of the user acquired by the external information acquisition unit.

10. The information processing apparatus according to claim 8, wherein
the persona management data generation and update unit
estimates the relationship level between the users on a basis of the identification information of the user and the action information of the user acquired by the external information acquisition unit.

11. The information processing apparatus according to claim 1, wherein
the recommended content selection unit
acquires user identification information from external information acquired by the external information acquisition unit, and acquires the persona management data of the user corresponding to the user identification information acquired, from the persona management database.

12. The information processing apparatus according to claim 1, wherein
the recommended content selection unit,
in a case where a new identification user is detected on a basis of the external information acquired by an external information acquisition unit, additionally acquires the persona management data of the new identification user from the persona management database.

13. An information processing system comprising
a user terminal and a data processing server,
wherein the user terminal
transmits external information acquired by an external information acquisition unit to the data processing server, and
the data processing server
receives the external information from the user terminal and
acquires a plurality of pieces of user-based persona management data corresponding to a plurality of users specified on a basis of the external information from a persona management database, selects data common among the plurality of pieces of persona management data that has been acquired, as recommended content, and transmits the recommended content to the user terminal.

14. The information processing system according to claim 13, wherein
the persona management data is data in which publication permission information corresponding to a relationship level according to the relationship level between users is registered, and
the data processing server
selects the recommended content from a range of publication permission information determined on a basis of a relationship level of the plurality of users corresponding to the plurality of pieces of persona management data acquired from the persona management database.

15. The information processing system according to claim 13, wherein
the data processing server includes
a persona management data generation and update unit that generates or updates the persona management data on a basis of the external information received from the user terminal.

16. The information processing system according to claim 15, wherein
the user terminal
acquires at least identification information of the user and action information of the user and transmits the at least identification information of the user and action information of the user to the data processing server, and
the persona management data generation and update unit of the data processing server
generates or updates the persona management data on a basis of the identification information of the user and the action information of the user received from the user terminal.

17. An information processing method performed in an information processing apparatus, wherein
a recommended content selection unit of the information processing apparatus
performs recommended content selection processing of acquiring user-based persona management data from a persona management database storing the user-based persona management data, and selecting recommended content from the persona management data that has been acquired, and
the recommended content selection unit, in the recommended content selection processing,
acquires a plurality of pieces of the persona management data corresponding to a plurality of users, respectively, from the persona management database and selects data common among the plurality of pieces of persona management data that has been acquired, as recommended content.

18. An information processing method performed in a data processing server that performs communication with a user terminal, the information processing method comprising:
receiving external information acquired by the user terminal, and
acquiring a plurality of pieces of user-based persona management data corresponding to a plurality of users specified on a basis of the external information from a persona management database, selecting data common among the plurality of pieces of persona management data that has been acquired, as recommended content, and transmitting the recommended content to the user terminal.

19. A program causing information processing to be performed in an information processing apparatus,
the program causing a recommended content selection unit of the information processing apparatus to
perform processing of acquiring user-based persona management data from a persona management database storing the user-based persona management data, and recommended content selection processing of selecting recommended content from the persona management data that has been acquired, and,
in the recommended content selection processing,
perform processing of acquiring a plurality of pieces of the persona management data corresponding to a plurality of users, respectively, from the persona management database and selecting data common among the plurality of pieces of persona management data that has been acquired, as recommended content.

20. A program that causes information processing to be performed in a data processing server that performs communication with a user terminal,
the program causing execution of
reception processing of external information acquired by the user terminal,
processing of acquiring a plurality of pieces of user-based persona management data corresponding to a plurality of users specified on a basis of the external information from a persona management database, and
processing of selecting data common among the plurality of pieces of persona management data that has been acquired, as recommended content, and transmitting the recommended content to the user terminal.
